# EUROPÄISCHE PATENTSCHRIFT

(11) **EP 3 381 861 B1**
(45) Veröffentlichungstag und Bekanntmachung des Hinweises auf die Patenterteilung: **29.07.2020**
(21) Anmeldenummer: 18160279.8
(22) Anmeldetag: 06.03.2018
(51) Int. Cl.: B66D 1/22, F16H 57/08, F16H 57/04, F16H 37/04

(54) **GETRIEBE MIT EINEM SCHMIERSYSTEM UND EINER FÖRDEREINRICHTUNG**
TRANSMISSION WITH A LUBRICATION SYSTEM AND A CONVEYOR
ENGRENAGE POURVU D'UN SYSTÈME DE LUBRIFICATION ET D'UN DISPOSITIF DE TRANSPORT

(30) Priorität: 30.03.2017 DE 102017106927
(43) Veröffentlichungstag der Anmeldung: 03.10.2018
(73) Patentinhaber: Zollern GmbH & Co. KG, 72517 Sigmaringendorf (DE)
(72) Erfinder: Hartmann, Roland, 72511 Bingen (DE); Häußler, Pierre, 72458 Albstadt (DE); Nazifi, Khashayar, 58300 Wetter (DE)
(74) Vertreter: SSM Sandmair

(56) Entgegenhaltungen:
- DE-A1- 4 435 849
- GB-A- 191 109 547
- US-A- 4 328 954
- US-A1- 2003 151 037

## Beschreibung

Die Erfindung betrifft ein Getriebe, insbesondere für eine Winde, beispielsweise eine Zugmittel- oder Seilwinde. Ein erster Aspekt betrifft die verbesserte Schmierung einer Welle-Nabe-Verbindung, mittels der die Antriebswelle eines Motors mit der Eingangswelle des Getriebes koppelbar ist. Ein zweiter Aspekt, der den ersten Aspekt weiterbildet, betrifft eine Fördereinrichtung zur Förderung von flüssigem Schmiermittel in einem Getriebe. Das Getriebe kann beispielsweise eine oder mehrere Planetenstufen aufweisen.

Aus dem Stand der Technik sind sogenannte Einschubgetriebe für Windentrommeln bekannt, wobei es sich bei der vorliegenden Erfindung in bevorzugten Ausführungen ebenfalls um ein Einschubgetriebe handeln kann. Bei Getrieben und insbesondere auch bei solchen Einschubgetrieben ist eine Schmierung der Getriebekomponenten mit einem geeigneten Schmiermittel erforderlich. Es sind tauchgeschmierte Getriebe bekannt, d. h. dass in einem Getriebe Schmieröl bis zu einem bestimmten Flüssigkeitsstand eingefüllt wird, wobei der Flüssigkeitsstand so ausgelegt ist, dass sich drehende Getriebekomponenten, wie z. B. Zahnräder, teilweise in das Öl eingetaucht sind. Die sich drehenden Getriebekomponenten nehmen das Schmieröl mit. Durch günstige Bauteil- und Gehäusegestaltung kann das mitgenommene und wieder abtropfende Öl auch an höher liegende, nicht eintauchende Schmierstellen, wie z. B. Wälzlager, transportiert werden. Für eine ordnungsgemäße Tauchschmierung ist es erforderlich, dass sich der Flüssigkeitsstand des Schmiermittels, d. h. die Position des Flüssigkeitsspiegels, zwischen einem maximalen Flüssigkeitsstand und einem minimalen Flüssigkeitsstand befindet. Der maximale und minimale Flüssigkeitsstand werden in der Regel vom Hersteller festgelegt und können z. B. durch Markierungen an entsprechender Stelle des Getriebes oder an dem Schauglas gekennzeichnet werden. Ist der Ölstand zu niedrig oder unterhalb des minimalen Flüssigkeitsstands, besteht die Gefahr, dass das Getriebe nicht mehr ordnungsgemäß geschmiert wird. Ist zu viel Öl im Getriebe, d. h. ist der Ölstand oberhalb des maximalen Flüssigkeitsstands, besteht die Gefahr von erhöhten Planschverlusten im Getriebe, wodurch der Wirkungsgrad gesenkt wird.

Es sind ferner Umlaufschmierungen bekannt, bei denen eine Fördereinrichtung, wie beispielsweise eine Verdrängerpumpe, insbesondere eine Zahnrad- oder Flügelzellenpumpe, Schmiermittel durch einen Fluidkreislauf fördert, wobei der Fluidkreislauf zu den schmierenden Getriebekomponenten führt.

Aus dem Stand der Technik ist bekannt, einen Antriebsmotor an ein Befestigungsgehäuse des Getriebes anzuschrauben, wobei die Antriebswelle des Motors mittels einer formflüssigen Welle-Nabe-Verbindung mit der Eingangswelle des Getriebes verbunden ist. Welle-Nabe-Verbindungen sind an sich bekannt. Bei formschlüssigen Welle-Nabe-Verbindungen kann über einen längeren Betriebszeitraum Reibkorrosion auftreten. Schmiermittel kann Reibkorrosion verhindern oder zumindest verringern.

Aus den Druckschriften DE 44 35 849 A1, US 2003/151037 A1 und US 4,328,954 A sind Getriebe für Winden bekannt, die mindestens eine Planetenstufe aufweisen. Aus der GB 09547 A (A.D. 1911) ist ein Getriebe mit einer Tauchschmierung bekannt.

Der Erfindung liegt die Aufgabe zugrunde, ein Getriebe bereitzustellen, bei dem in der Welle-Nabe-Verbindung zwischen der Antriebswelle des Motors und der Eingangswelle des Getriebes verhindert oder verringert werden kann. Die Aufgabe wird mit dem Getriebe nach Anspruch 1 gelöst.

Einer Weiterbildung der Erfindung, liegt die Aufgabe zugrunde, ein Getriebe bereitzustellen, welches eine kostengünstige, zuverlässige und wartungsarme Fördereinrichtung zur Förderung von Schmiermittel aufweist. Die Aufgabe wird mit dem Getriebe nach dem abhängigen Anspruch 10 gelöst.

Vorteilhafte Weiterentwicklungen ergeben sich aus den abhängigen Ansprüchen, der Beschreibung und den Figuren.

Die Erfindung geht von einem Getriebe, insbesondere für eine Winde oder Zugmittelwinde, insbesondere Seilwinde, aus. Es umfasst ein erstes Gehäuse und eine Eingangswelle, die relativ zu dem ersten Gehäuse um eine Drehachse drehbar ist, und ein zweites Gehäuse, das relativ zu dem ersten Gehäuse um die Drehachse drehbar an dem ersten Gehäuse gelagert ist, beispielsweise mittels einem, zwei oder noch mehr Drehlagern, insbesondere Wälzlagern. Das Getriebe kann mindestens eine Planetenstufe, wie z. B. eine einzige, zwei, drei oder noch mehr Planetenstufen umfassen. In Ausführungen mit mehreren Planetenstufen ist es bevorzugt, dass diese kinematisch in Serie geschaltet sind. Eine Planetenstufe, auch Planetengetriebe genannt, umfasst ein Sonnenrad, mindestens ein, in der Regel jedoch mehrere Planetenräder, die mit dem Sonnenrad kämmen, einen Planetenträger, an dem das eine oder die mehreren der Planetenräder um Drehachsen, die von der Drehachse des Sonnenrads beabstandet sind, relativ zu dem Planetenträger drehen können, wobei zwischen Planetenträger und Sonnenrad eine Relativbewegung um die Drehachse des Sonnenrads möglich ist oder möglich sein kann. Ferner weist die Planetenstufe ein Hohlrad auf, welches mit dem einen oder den mehreren Planetenrädern kämmt und beispielsweise Innenzahnrad ausgebildet ist.

Das zweite Gehäuse kann einen Teil des ersten Gehäuses über dessen Umfang umgeben. Insbesondere können in dem dadurch gebildeten radialen Spalt zwischen erstem und zweitem Gehäuse das eine oder die mehreren Drehlager angeordnet sein, über die das zweite Gehäuse drehbar an dem ersten Gehäuse gelagert ist.

Die mindestens eine Planetenstufe verbindet die Eingangswelle kinematisch so mit dem zweiten Gehäuse, dass eine Drehung der Eingangswelle eine über- oder untersetzte Drehung des zweiten Gehäuses relativ zu dem Gehäuse um die Drehachse unter Umkehr oder Beibehaltung der Drehrichtung bewirkt. Wird die Drehung der Eingangswelle unter Drehzahlerhöhung an das zweite Gehäuse übertragen, ist die Drehung übersetzt. Wird die Drehung der Eingangswelle unter Drehzahlverringerung an das zweite Gehäuse übertragen, ist die Drehung untersetzt. Das erste Gehäuse und das zweite Gehäuse fassen gemeinsam einen Aufnahmeraum ein, in dem ein flüssiges Schmiermittel, insbesondere Schmieröl, und die mindestens eine Planetenstufe angeordnet sind. Die mindestens eine Planetenstufe ist zumindest teilweise unter dem Flüssigkeitsspiegel des flüssigen Schmiermittels getaucht. Hierdurch wird eine Tauchschmierung realisiert, bei der nur Teile der Getriebekomponente in das Schmiermittel getaucht sind. Wie eingangs angegeben, können für das Getriebe ein maximaler Flüssigkeitsstand und ein minimaler Flüssigkeitsstand festgelegt sein, zwischen denen sich der Flüssigkeitsspiegel für eine ordnungsgemäße Schmierung des Getriebes befinden soll. An dem Getriebe oder einer Anzeigeeinrichtung für das Getriebe, an der der Schmiermittelstand, insbesondere die Position des Flüssigkeitsspiegels, visuell ablesbar ist, können eine Markierung für den maximalen Flüssigkeitsspiegel und/oder eine Markierung für den minimalen Flüssigkeitsspiegel angeordnet sein.

Das Getriebe umfasst ein in Bezug auf das erste Gehäuse feststehendes Befestigungsgehäuse, welches ausgebildet ist, um daran einen Antriebsmotor für das Getriebe zu befestigen. Beispielsweise kann das Befestigungsgehäuse einen Befestigungsflansch aufweisen, an dem der Motor befestigt oder angeflanscht werden kann, beispielsweise mittels mehrerer Schraubenbolzen. Andere Befestigungen für den Motor an dem Befestigungsgehäuse sind ebenfalls möglich. Insbesondere kann der Motor ein Motorgehäuse aufweisen, welches an dem Befestigungsgehäuse des Getriebes befestigt werden kann oder befestigt ist. Der Antriebsmotor kann beispielsweise ein Elektromotor, ein Hydromotor oder ein anderer geeigneter Motor sein.

Der Motor umfasst ein Motorgehäuse und ein relativ zum Motorgehäuse um eine Drehachse drehbare Antriebswelle oder Motorwelle, die beispielsweise stirnseitig aus dem Motor hervortritt oder zumindest zugänglich sein kann.

Das Befestigungsgehäuse kann einen zum Motor hin offenen Vorraum einfassen. Das Befestigungsgehäuse kann beispielsweise eine sich um die Drehachse der Eingangswelle erstreckende Umfangswand, die den Vorraum mit ihrem Innenumfang einfasst oder begrenzt, und eine den Vorraum axial begrenzende Stirnwand aufweisen. Die Stirnwand kann eine um die Drehachse der Eingangswelle sich erstreckende Öffnung aufweisen, welche den Durchtritt der Antriebswelle des Motors, der Eingangswelle des Getriebes oder eines anderen, zwischen Eingangswelle und Antriebswelle angeordneten Bauteils ermöglicht, um eine verdrehfeste Verbindung zwischen der Antriebswelle des Motors und der Eingangswelle des Getriebes, insbesondere mittelbar und unmittelbar, herstellen zu können.

Die Eingangswelle kann über mindestens eine insbesondere formschlüssige Welle-Nabe-Verbindung um die Drehachse verdrehfest, d. h. drehmomentübertragend, mit der Antriebswelle des Motors verbunden sein oder werden. Beispielsweise können ein Zwischenstück und die Antriebswelle des Motors eine erste Welle-Nabe-Verbindung bilden, wobei das Zwischenstück und die Eingangswelle des Getriebes optional eine zusätzliche, zweite Welle-Nabe-Verbindung bilden können. Alternativ können die Eingangswelle und die Antriebswelle des Motors eine Welle-Nabe-Verbindung bilden. Das Zwischenstück kann beispielsweise von einem Rotor einer Bremse gebildet oder der Rotor der Bremse sein.

Zumindest ist die Eingangswelle um die Drehachse verdrehfest mit einem ersten Verbindungselement einer Welle-Nabe-Verbindung verbunden, wobei die Antriebswelle des Motors um die Drehachse verdrehfest mit dem ersten Verbindungselement verbindbar ist, um die formschlüssige Welle-Nabe-Verbindung zur Drehmomentübertragung herzustellen. Das erste Verbindungselement kann in dem Vorraum angeordnet sein oder über eine zur offenen Seite des Vorraums weisende Öffnung in der Stirnwand mit dem Vorraum flüssigkeitskommunizierend verbunden sein. Zumindest kann das Verbindungselement in Bezug auf den Vorraum so angeordnet sein, dass in dem Vorraum befindliches flüssiges Schmiermittel das erste Verbindungselement zumindest teilweise benetzt oder benetzen kann.

Die hierin verwendeten relativen Angaben beziehen sich - sofern nichts anderes angegeben ist - auf die Schwerkraftrichtung. Unter einem tiefsten Punkt oder einer tiefsten Stelle wird der nächst zum Erdmittelpunkt hin liegende Punkt oder Stelle verstanden. Unter einem höchsten Punkt wird der am weitesten von dem Erdmittelpunkt entfernte Punkt oder Stelle verstanden. Oberhalb bedeutet weiter vom Erdmittelpunkt weg und unterhalb näher zum Erdmittelpunkt hin.

Das Getriebe kann ferner mindestens einen Fluidkanal, insbesondere Fluidabführkanal, umfassen, über den der Vorraum flüssigkeitskommunizierend mit dem Aufnahmeraum verbunden ist und welcher eine Austrittsöffnung aufweist, mit welcher der Fluidkanal aus dem Vorraum führt, wobei die Austrittsöffnung oberhalb des für den Aufnahmeraum festgelegten maximalen Flüssigkeitsstands und oberhalb des untersten Punkts des ersten Verbindungselements, insbesondere des untersten Punkts der Welle-Nabe-Verbindung, zu der das erste Verbindungselement gehört, angeordnet ist. Unter dem untersten Punkt des ersten Verbindungselements wird der zum Erdmittelpunkt nächstliegende Punkt des ersten Verbindungselements verstanden. Der Fluidkanal kann beispielsweise von mehreren Abschnitten, wie z. B. Bohrungen gebildet werden, und sich durch die Wand des ersten Gehäuses, und/oder durch die Wand eines optional vorhandenen Bremsgehäuses oder Verbindungsgehäuses und/oder durch die Wand des Befestigungsgehäuses erstrecken. Die Öffnung, mit der der Fluidkanal in den Aufnahmeraum mündet, kann beispielsweise unterhalb des minimalen Flüssigkeitsstands angeordnet sein.

Das Getriebe umfasst ferner eine Fördereinrichtung, welche das Schmieröl aus dem Aufnahmeraum über mindestens einen Fluidzuführkanal in den Vorraum fördert oder fördern kann, wobei sich durch die Position der Austrittsöffnung des Fluidkanals aus dem Vorraum ein Flüssigkeitsspiegel in den Vorraum einstellt, der oberhalb des maximalen Flüssigkeitsstands liegt, wobei sich das erste Verbindungselement der Welle-Nabe-Verbindung zumindest teilweise unter dem Flüssigkeitsspiegel des Vorraums befindet. Dadurch wird sichergestellt, dass die Welle-Nabe-Verbindung mit dem flüssigen Schmiermittels des Vorraums benetzt ist, wodurch der Verschleiß der Welle-Nabe-Verbindung verringert wird. Dadurch, dass die Fördereinrichtung, insbesondere gekoppelt an die Drehung der Eingangswelle, Schmiermittel aus dem Aufnahmeraum in den Vorraum fördert und die Austrittsöffnung als Überlauf dient, wird der Flüssigkeitsspiegel im Vorraum unabhängig von dem tatsächlichen Flüssigkeitsspiegel im Aufnahmeraum im Wesentlichen konstant auf der Höhe der Austrittsöffnung gehalten. Zudem findet ein Austausch des Schmiermittels im Vorraum statt, wodurch einer Überhitzung des Schmiermittels im Vorraum entgegengewirkt wird.

Insbesondere ist der Aufnahmeraum strömungstechnisch zwischen der Fördereinrichtung oder dem Fluidzuführkanal, und dem Fluidkanal, der insbesondere als Fluidabführkanal dient, angeordnet.

Beispielsweise kann der für den Aufnahmeraum festgelegte maximale Flüssigkeitsstand unterhalb der Drehachse der Eingangswelle angeordnet sein, wobei die Austrittsöffnung, mit der der Fluidkanal aus dem Vorraum führt, zumindest oberhalb des maximalen Flüssigkeitsstands vorzugsweise auf Höhe oder oberhalb der Höhe der Drehachse der Eingangswelle angeordnet ist. Alternativ oder zusätzlich kann die Öffnung, mit der Fluidkanal aus dem Vorraum führt, unterhalb des obersten Punkts des ersten Verbindungselements oder der Welle-Nabe-Verbindung, zu der das erste Verbindungselement gehört, angeordnet sein. Dadurch kann vorteilhaft erreicht werden, dass der Bereich, der auf der dem Vorraum abgewandten Seite der Welle-Nabe-Verbindung liegt, entlüftet werden kann. Dadurch kann eine verbesserte Benetzung mit dem Schmiermittel erfolgen.

Beispielsweise kann der radiale Spalt, der zwischen dem das erste Verbindungselement bildenden Körper, insbesondere Verbindungsstück oder Rotor der Bremse, und dem Befestigungsgehäuse gebildet ist, mittels einer ringförmigen Dichtung abgedichtet sein. Die Austrittsöffnung des Fluidkanals kann oberhalb des untersten Punkts und/oder unterhalb des obersten Punkts der Dichtung angeordnet sein. Dadurch kann erreicht werden, dass die Dichtung von dem im Vorraum befindlichen flüssigen Schmiermittel benetzt wird, wodurch die Lebensdauer der Dichtung verlängert wird. Die ringförmige Dichtung kann sich um die Drehachse, insbesondere konzentrisch erstrecken, und/oder an dem Befestigungsgehäuse, beispielsweise an dessen Stirnwand, um die Drehachse verdrehfest befestigt sein. Insbesondere kann die Dichtung ein um die Drehachse verdrehfest an dem Verbindungsgehäuse befestigter Wellendichtring oder Radial-Wellenrichtring sein.

In Weiterbildungen kann zwischen dem ersten Gehäuse und dem Befestigungsgehäuse eine Bremse angeordnet sein, die beispielsweise als Betriebs- und/oder Haltebremse ausgelegt sein kann. Die Bremse kann ein in Bezug auf das erste Gehäuse und das Befestigungsgehäuse feststehendes Bremsgehäuse und einen relativ zu dem Bremsgehäuse um die Drehachse der Eingangswelle drehbaren Rotor aufweisen. Beispielsweise kann das Bremsgehäuse mittels Schraubenbolzen mit dem Befestigungsgehäuse und/oder dem ersten Gehäuse verbunden oder daran angeflanscht sein. Dem Bremsgehäuse kommt somit auch die Aufgabe eines Verbindungsgehäuses zu, welches das erste Gehäuse und das Befestigungsgehäuse verbindet. Der Rotor kann beispielsweise mit der Eingangswelle verdrehfest verbunden sein, insbesondere eine oder die weiter oben erwähnte zweite formschlüssige Welle-Nabe-Verbindung mit der Eingangswelle bilden, und/oder verdrehfest mit der Antriebswelle des Motors verbunden oder verbindbar sein, insbesondere mittels einer oder der weiter oben erwähnten formschlüssigen Welle-Nabe-Verbindung, welche das erste Verbindungselement bildet. Der Rotor kann um die Drehachse verdrehfest mit der Eingangswelle und dem ersten Verbindungselement verbunden sein.

Die Bremse kann mindestens einen ersten um die Drehachse verdrehfest mit dem Bremsgehäuse verbundenen Bremskörper, insbesondere mehrere Bremslamellen, und mindestens einen zweiten um die Drehachse verdrehfesten Rotor verbundenen Bremskörper, insbesondere mehrere Bremslamellen, aufweisen. Ferner kann die Bremse ein Druckstück aufweisen, welches den mindestens einen Bremskörper und den mindestens einen zweiten Bremskörper in Richtung der Drehachse gegeneinander drücken kann, und insbesondere hierfür ausgelegt ist. Durch das Gegeneinanderdrücken der ersten und zweiten Bremskörper erhöht sich die Reibung zwischen den Bremsköpern, wodurch eine Bremswirkung erzielt wird. Insbesondere können die Bremslamellen so angeordnet sein, dass zwischen zwei ersten Bremslamellen eine zweite Bremslamelle angeordnet ist und zwischen zwei zweiten Bremslamellen eine erste Bremslamelle angeordnet ist. Mit anderen Worten sind entlang der Drehachse abwechselnd erste und zweite Bremslamellen angeordnet.

Das Druckstück kann beispielsweise mittels des Drucks eines Druckfluids, insbesondere Druckgas, Druckluft oder Hydraulikflüssigkeit, in einem Druckraum oder mittels Federkraft die ersten und zweiten Bremskörper gegeneinander drücken. In Weiterbildungen kann eine in Richtung der Drehachse weisende Wand des Druckstücks eine axiale Begrenzung des Druckraums bilden, wobei die Bremse ferner mindestens eine Feder, beispielsweise eine Schrauben- oder Wendelfeder, umfassen kann, welche so, insbesondere auf Druck, vorgespannt ist und sich vorzugsweise an dem Druckstück abstützt, dass das Druckstück den mindestens einen ersten Bremskörper und den mindestens einen zweiten Bremskörper gegeneinander drückt, wenn der Druckraum entlüftet ist, wobei die Feder gespannt und die von dem Druckstück auf die ersten und zweiten Bremskörper ausgeübte Kraft verringert wird, wenn der Druckraum bedruckt wird. Durch eine solche Ausgestaltung wird erreicht, dass ein Ausfall der Versorgung des Druckraums mit Druckfluid dazu führt, dass die mindestens eine Feder die ersten und zweiten Bremskörper über das Druckstück gegeneinander drückt, wodurch die Bremse das Getriebe bzw. die Winde bis zum Stillstand bremst und/oder im Stillstand hält. Durch Bedrucken des Druckraums mit Druckfluid kann die Bremse wieder gelöst werden.

Das Bremsgehäuse, insbesondere die Wand des Bremsgehäuses, kann einen Abschnitt des mindestens einen zwischen der Fördereinrichtung und dem Vorraum angeordneten Fluidzuführkanals und/oder einen Abschnitt des mindestens einen zwischen dem Vorraum und dem Aufnahmeraum angeordneten Fluidkanals, insbesondere Fluidabführkanals aufweisen. Hierdurch kann vermieden werden, dass externe Leitungen benötigt werden, welche den Vorraum mit dem flüssigen Schmiermittel versorgen.

In Weiterbildungen kann der zwischen dem ersten Gehäuse und der Eingangswelle gebildete radiale Spalt vom Aufnahmeraum zur Bremse hin mittels einer ringförmigen, die Drehachse, insbesondere konzentrisch, umgebenden Dichtung abgedichtet sein. Die Dichtung kann beispielsweise ein Wellendichtring oder ein Radial-Wellendichtring sein. Insbesondere kann die Dichtung um die Drehachse verdrehfest an dem ersten Gehäuse befestigt sein. Die Dichtung verhindert, dass flüssiges Schmiermittel aus dem Aufnahmeraum über den Spalt zu dem Befestigungsgehäuse und/oder zu der optional vorhandenen Bremse hin austritt.

Wie erwähnt, kann die den Rotor oder das Verbindungsstück und die Eingangswelle verbindende formschlüssige Welle-Nabe-Verbindung flüssigkeitskommunizierend mit dem Vorraum in Verbindung stehen. Der zwischen dem Rotor oder dem Verbindungsstück und der Eingangswelle gebildete radiale Spalt kann mittels einer ringförmigen Dichtung, insbesondere eines Dichtrings, abgedichtet sein, wobei die den Rotor oder das Verbindungsstück und die Eingangswelle verbindende Welle-Nabe-Verbindung zwischen dem Spalt oder dem Dichtring und dem Vorraum angeordnet ist. Dadurch wird bewirkt, dass auch diese Welle-Nabe-Verbindung von dem flüssigen Schmiermittel des Vorraums benetzt wird. Hierdurch kann auch der Verschleiß dieser Welle-Nabe-Verbindung verringert werden. Beispielsweise kann die Austrittsöffnung, mit der der mindestens eine Fluidkanal aus dem Vorraum führt, oberhalb des untersten Punkts und/oder unterhalb des obersten Punkts dieser Welle-Nabe-Verbindung angeordnet sein. Hierdurch kann vorteilhaft erreicht werden, dass die vom Vorraum abgewandte Seite der Welle-Nabe-Verbindung entlüftet wird, wodurch die Schmierung der Welle-Nabe-Verbindung verbessert wird. Beispielsweise kann der Durchmesser der von der Eingangswelle und dem Rotor (oder dem Verbindungsstück) gebildeten Welle-Nabe-Verbindung kleiner sein als der Durchmesser der Welle-Nabe-Verbindung, die von dem Rotor (oder dem Verbindungsstück) und der Antriebswelle des Rotors gebildet wird. Hierdurch kann die genannte Entlüftung nochmals verbessert werden.

Nach einer Weiterbildung der Erfindung, verbindet die mindestens eine Planetenstufe die Eingangswelle zusätzlich kinematisch so mit einer ringförmig, insbesondere konzentrisch, um die Drehachse umlaufenden Förderfläche, dass eine Drehung der Eingangswelle eine Drehung der Förderfläche relativ zu dem ersten Gehäuse der Drehachse bewirkt. Die Förderfläche kann beispielsweise von einem Planetenträger der mindestens einen Planetenstufe oder von dem zweiten Gehäuse gebildet sein, insbesondere von einer in Richtung der Drehachse weisenden Stirnfläche.

Beispielsweise kann die Förderfläche eine durch Materialabtragung oder Spanabhebung gebildete Fläche sein. D. h. dass die Förderfläche materialabtragend oder spanabhebend bearbeitet wurde, beispielsweise durch Fräsen, Drehen oder Schleifen. Bevorzugt ist die Förderfläche durch Plandrehen gebildet. Dadurch wird der Verschleiß des Abstreifers verringert, vor allem dann, wenn der Körper, der die Förderfläche bildet, durch Gießen, insbesondere durch solch ein Gießverfahren, welches eine verhältnismäßig grobe Oberflächenbeschaffenheit ergibt, hergestellt wurde.

In dem vom ersten Gehäuse und zweiten Gehäuse gebildeten Aufnahmeraum sind das flüssige Schmiermittel und die Förderfläche angeordnet. Der für den Aufnahmeraum festgelegte maximale Flüssigkeitsstand und minimale Flüssigkeitsstand für den flüssigen Schmierstoff sind so festgelegt, dass die Förderfläche zumindest teilweise unter den Flüssigkeitsspiegel des Schmiermittels getaucht ist, wenn sich dieser zwischen dem maximalen Flüssigkeitsstand und dem minimalen Flüssigkeitsstand befindet. Die Förderfläche kann sich beispielsweise ringförmig um die Drehachse erstrecken. Wenn die Förderfläche um die Drehachse gedreht wird, durchläuft sie das flüssige Schmiermittel, wobei ein Schmiermittelfilm an der Förderfläche verbleibt, wenn sich die Förderfläche aus dem Schmiermittel heraus bewegt.

Es ist ferner ein Abstreifer im Aufnahmeraum vorgesehen, der an dem ersten Gehäuse angeordnet ist und an der Förderfläche anliegt. Alternativ kann der Abstreifer kontaktfrei zur Förderfläche sein, d. h. dass der Abstreifer nicht an der Förderfläche anliegt, aber so nahe an der Förderfläche angeordnet sein, dass der Abstreifer in einen Kontakt mit dem auf der Förderfläche befindlichen Schmiermittelfilm gelangen kann oder gelangt. Beispielsweise kann zwischen Abstreifer und Förderfläche ein, insbesondere axialer oder/und radialer, Spalt, insbesondere Abstreifspalt, gebildet sein, dessen Spaltbreite so bemessen ist, dass der Abstreifer auf den Schmiermittelfilm einwirkt. Insbesondere kann die Spaltbreite kleiner oder gleich 4 mm, vorzugsweise kleiner oder gleich 3 mm oder kleiner oder gleich 2 mm sein.

Durch den Abstreifer wird der Schmiermittelfilm auf der Förderfläche, der beim Durchlauf der Förderfläche durch das Schmiermittel entsteht, von der Förderfläche abgestreift oder abgerakelt. Wenigstens ein, insbesondere von dem ersten Gehäuse gebildeter Fluidzuführkanal, insbesondere der oben oder im Zusammenhang mit dem ersten Aspekt genannte Fluidzuführkanal, kann in Bezug auf den Abstreifer so angeordnet sein, dass das abgestreifte Schmiermittel in den wenigstens einen Fluidzuführkanal gelangt. Dadurch kann das abgestreifte Schmiermittel über den wenigstens einen Zuführkanal in den Vorraum transportiert werden.

Der Abstreifer kann einen federnd gelagerten Abschnitt aufweisen. Das heißt, dass der Abstreifer einen federnden Abschnitt selbst bildet, wie z. B. durch eine federnd oder elastische Gestaltung. Der federnd gelagerte Abschnitt kann durch die Federkraft des federnden oder elastischen Abschnitts gegen die Förderfläche gedrückt werden. Alternativ kann zwischen dem Abstreifer und dem ersten Gehäuse eine insbesondere separate Feder angeordnet sein, die den Abstreifer gegen die Förderfläche drückt. Die Feder kann beispielsweise eine Wendelfeder oder eine Blattfeder, ein Federring, eine Wellfeder oder dgl. sein.

Der Abstreifer kann eine Wand, deren Stirnseite an der Förderfläche anliegt oder zwischen der und der Förderfläche der Spalt gebildet ist, und zumindest auf einer Seite, vorzugsweise auf beiden Seiten der Wand, und unterhalb der Wand eine oder jeweils eine Rinne aufweisen, welche zu dem Fluidzuführkanal führt. Dadurch kann das von dem Förderabschnitt abgestreifte Schmiermittel über die Rinne zu dem Fluidzuführkanal transportiert werden.

Der mindestens eine Fluidzuführkanal kann Teil einer Umlaufschmierung sein, mit der das von dem Abstreifer in den Fluidzuführkanal gelangende Schmiermittel, insbesondere das von der Förderfläche abgestreifte Schmiermittel, beispielsweise über den Vorraum und/oder eine Anzeigeeinrichtung, wie sie z. B. hierin beschrieben wird, wieder in den Aufnahmeraum geführt wird. Die insbesondere die Förderfläche und den Abstreifer umfassende Fördereinrichtung ist im Vergleich zu Schmiermittelpumpen, die beispielsweise nach dem Verdrängerprinzip arbeiten, einfach herstellbar und nimmt wenig Raum ein. Außerdem erlaubt die Fördereinrichtung einen zuverlässigen Betrieb.

Insbesondere an dem Teil, an dem die Förderfläche gebildet ist, kann außenumfangsseitig der Förderfläche, d. h. bezogen auf die Drehachse weiter weg von der Drehachse als die Förderfläche, mindestens eine zu der Förderfläche hin offene Förderzelle gebildet sein. Die mindestens eine Förderzelle ist dazu ausgebildet, dass sie sich während des Durchlaufs durch das Schmiermittel unterhalb des Schmiermittelspiegels mit dem Schmiermittel füllt und Schmiermittel zu dem Abstreifer oder der Förderfläche hin abgibt. Dadurch kann noch mehr Schmiermittel gefördert und optional in den Fluidzuführkanal geleitet werden als mit der Förderfläche allein. Das Schmiermittel aus der mindestens einen Förderzelle kann aufgrund der Schwerkraft und/oder der Zentrifugalkraft auf die Förderfläche und/oder den Abstreifer fließen oder abgegeben werden.

In einer Variante für den zweiten Aspekt kann die Fördereinrichtung ohne den Abstreifer und die Förderfläche auskommen und dafür die mindestens eine Förderzelle und statt dem Abstreifer einen Auffänger aufweisen. Die mindestens eine Planetenstufe kann die Eingangswelle kinematisch so mit der mindestens einen Förderzelle verbinden, dass eine Drehung der Eingangswelle eine Drehung der Förderzelle relativ zu dem ersten Gehäuse um die Drehachse bewirkt. Die mindestens eine zum Auffänger hin offene Förderzelle ist dazu ausgebildet, dass sie sich während des Durchlaufs durch das Schmiermittel unterhalb des Schmiermittelspiegels mit dem Schmiermittel füllt und Schmiermittel zu dem Auffänger hin abgibt. Das Schmiermittel aus der mindestens einen Förderzelle kann aufgrund der Schwerkraft und/oder der Zentrifugalkraft an den Auffänger fließen oder abgegeben werden.

Das erste Gehäuse und das zweite Gehäuse fassen den Aufnahmeraum ein, in dem das flüssige Schmiermittel und die mindestens eine Förderzelle angeordnet sind, wobei der maximale Flüssigkeitsstand und der minimale Flüssigkeitsstand für den flüssigen Schmierstoff so festgelegt sind, dass die mindestens eine Förderzelle zumindest teilweise unter den Flüssigkeitsspiegel des Schmiermittels getaucht ist, wenn sich dieser zwischen dem maximalen Flüssigkeitsstand und dem minimalen Flüssigkeitsstand befindet.

Die Variante umfasst den, insbesondere oberhalb des maximalen Flüssigkeitsspiegels im Aufnahmeraum oder oberhalb der Austrittsöffnung des Vorraums angeordneten Auffänger, der an dem ersten Gehäuse angeordnet oder davon gebildet ist und in Bezug auf die mindestens eine Förderzelle so angeordnet ist, dass aus der zu dem Auffänger hin offenen Förderzelle Schmiermittel an den Auffänger fließen oder abgeben werden kann. Der Auffänger kann während eines Teils eines vollständigen Umlaufs der mindestens einen Förderzelle um die Drehachse unterhalb der Öffnung der mindestens einen Förderzelle angeordnet sein, beispielsweise dann, wenn die mindestens eine Förderzelle in Bezug auf die Drehachse eine Drehposition, wie zum Beispiel die oberste Position, einnimmt, in der sie oberhalb des Auffängers angeordnet ist.

Der wenigstens eine, insbesondere von dem ersten Gehäuse gebildete, Fluidzuführkanal kann in Bezug auf den Auffänger so angeordnet sein, dass Schmiermittel aus dem Auffänger in den wenigstens einen Fluidzuführkanal gelangt. Zum Beispiel kann der mindestens eine Fluidzuführkanal in dem Auffänger münden. Der Auffänger kann beispielsweise rinnen- oder trichterförmig, vorzugweise so gestaltet sein, dass am tiefsten Punkt des Auffängers der Fluidzuführkanal in den Auffänger mündet.

Beispielsweise können nach dem zweiten Aspekt oder seiner Variante mehrere Förderzellen in Umfangsrichtung um die Drehachse verteilt angeordnet sein. Benachbarte Förderzellen können voneinander über jeweils eine Wand getrennt werden. Die mindestens eine Förderzelle kann in beispielsweise zwischen einem Abschnitt des zweiten Gehäuses, der den Lagersitz für ein Wälzlager, mit dem sich das zweite Gehäuse um die Drehachse drehbar an dem ersten Gehäuse abstützt, und einem radial außerhalb davon angeordneten Abschnitt des zweiten Gehäuses angeordnet sein. Insbesondere können die Abschnitte von dem gleichen Gehäuseteil des zweiten Gehäuses gebildet werden.

Die Erfindung gemäß erstem und zweitem Aspekt und gemäß der Variante für den zweiten Aspekt lässt sich vorteilhaft bei einer Winde, insbesondere einer Zugmittelwinde oder Seilwinde, vorteilhaft einsetzen. Die Winde umfasst ein hierin beschriebenes Getriebe, ein Windengestell mit zumindest einer Wand, an der das erste Gehäuse des Getriebes verdrehfest befestigt ist, eine relativ zu dem Windengestell um die Drehachse drehbare, verdrehfest mit dem zweiten Gehäuse verbundene Windentrommel. Die Windentrommel kann auf einer Seite der Wand des Windengestells und das Befestigungsgehäuse auf der anderen Seite der Wand des Windengestells angeordnet ist. Hierdurch lässt sich der Motor einfach an das Getriebe der Winde anbringen. Das Getriebe kann als Einschubgetriebe ausgestaltet sein, wobei das Getriebe über die Stirnseite der Windentrommel in die Windentrommel eingeführt ist. Das zweite Gehäuse, insbesondere ein Befestigungsflansch des zweiten Gehäuses kann mit Hilfe von mehreren Schraubenbolzen an der Windentrommel befestigt oder angeschraubt sein. Zumindest das zweite Gehäuse kann sich zumindest zum größten Teil innerhalb der Windentrommel befinden oder von der Windentrommel umgeben sein.

Im Folgenden wird eine Ausführungsform eines Getriebes für eine Winde anhand von Figuren beschrieben. Die dabei offenbarten Merkmale bilden je einzeln und in jeglicher Kombination den Gegenstand der Erfindung vorteilhaft weiter. Es zeigen:
- Figur 1: eine Seitenansicht einer Winde oder zumindest eines Teils davon, in einer Schnittdarstellung,
- Figur 2: eine Vorderansicht der Winde aus Figur 1 in einem Schnitt durch eine Anzeigeeinrichtung,
- Figur 3: einen Abstreifer entlang des Schnitts A-A und

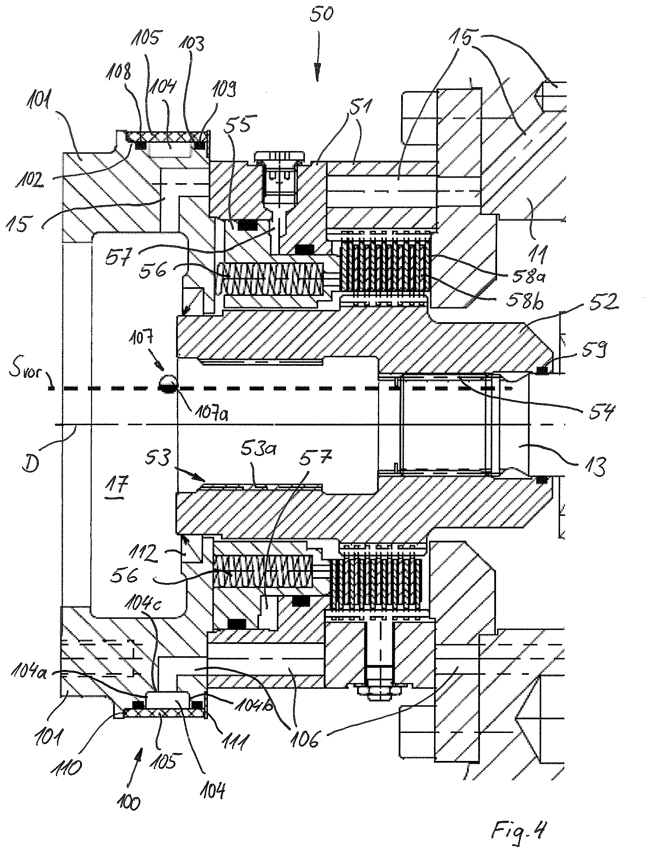

- Figur 4: einen vergrößerten Ausschnitt aus Figur 1.

In den Figuren wird eine Winde 1 oder zumindest ein Teil davon in verschiedenen Ansichten gezeigt.

### Winde/Getriebe

Die Winde 1 umfasst ein Windengestell 3, ein (Einschub-)Getriebe 10 und eine Windentrommel 2. Die Winde 1 kann ferner einen Antriebsmotor, der beispielsweise als Elektromotor oder als Hydromotor ausgebildet sein kann, umfassen, der an dem Getriebe 10 befestigt ist. Der Motor dient zum Antrieb der Winde 1.

Die Windentrommel 2 ist relativ zu dem Windengestell 3 um die Drehachse D für einen Hub- und Senkbetrieb in beide Drehrichtungen drehbar. Die Windentrommel 2 ist in der Figur nur vereinfacht und abschnittsweise dargestellt. Solche Windentrommeln sind allgemein bekannt.

Das Windengestell 3 weist zwei Seitenwände auf, zwischen denen die Windentrommel 2 angeordnet ist. Die Windentrommel 2 stützt sich auf einer Seite mittelbar über das Getriebe 10 an der Seitenwand und mit der anderen Seite ebenfalls mittelbar oder unmittelbar an der anderen Seitenwand des Windengestells ab. Beispielsweise kann auf der anderen Seite ein Lagerzapfen gebildet sein, über den sich die Windentrommel an dem Windengestell 3 stützt. Somit stützt sich die Windentrommel 2 beidseitig drehbar mittelbar oder unmittelbar an dem Windengestell 3 ab.

Das Getriebe 10 weist ein erstes Gehäuse 11 auf, welches verdrehfest und axial unverschiebbar an der in der Figur gezeigten Wand des Windengestells 3 befestigt ist. In dem gezeigten Beispiel ist das erste Gehäuse 11 mittels einer Vielzahl von Schraubenbolzen an dem Windengestell 3 befestigt. Die Winde 10 weist ein zweites Gehäuse 12 auf, welches über zwei Wälzlager 18 und 19 um die Drehachse D drehbar an dem ersten Gehäuse 11 gelagert ist. Das zweite Gehäuse 12 ist dreh- und axialfest mit der Windentrommel 2 gefügt, wie z. B. mittels einer Vielzahl von Schraubenbolzen. Ein zwischen dem ersten Gehäuse 11 und dem zweiten Gehäuse 12 gebildeter Ringspalt wird mittels einer Dichtung, insbesondere einer Radial-Wellendichtung abgedichtet, wodurch das erste Gehäuse 11 und das zweite Gehäuse 12 einen Aufnahmeraum 14 flüssigkeitsdicht abdichten, so dass eine in dem Aufnahmeraum 14 enthaltene Flüssigkeit, wie z. B. ein flüssiges Schmiermittel, insbesondere Schmieröl, in dem Aufnahmeraum 14 gehalten wird und nicht in die Umgebung abgegeben werden kann. Zweckmäßigerweise befinden sich die Lager 18 und 19 in dem Aufnahmeraum 14, um deren Schmierung sicherzustellen. Das insbesondere topfförmige zweite Gehäuse 12 wird zumindest größtenteils von der Windentrommel 2 umgeben. Bei dem Getriebe 10 handelt es sich somit um ein Einschubgetriebe, welches stirnseitig in die Windentrommel 2 eingefügt ist, um das Getriebe 10 platzsparend für eine kompakte Bauweise der Winde 1 anzubringen.

Die Winde 10 weist eine Eingangswelle 13 auf, die konzentrisch zur Drehachse D angeordnet und relativ zu dem ersten Gehäuse 11 um die Drehachse D drehbar ist. Die Eingangswelle 13 ist über ein Dreh-, insbesondere Wälzlager drehbar an dem ersten Gehäuse 11 gelagert. Der radiale Spalt zwischen durch ersten Gehäuse 11 und der Eingangswelle 13 wird mittels einer Dichtung, insbesondere eines Radial-Wellendichtrings abgedichtet, so dass keine Flüssigkeit aus dem Aufnahmeraum 14 über diese Dichtung austreten kann. Auch dieses Drehlager befindet sich zweckmäßigerweise zur Sicherstellung seiner Schmierung in dem Aufnahmeraum 14.

Das Getriebe 10 weist mehrere Planetenstufen 20, 30, 40 auf, welche die Eingangswelle 13 kinematisch so mit dem zweiten Gehäuse 12 verbinden, das eine Drehung der Eingangswelle 13 unter Drehzahlverringerung an das zweite Gehäuse 12 und somit an die Windentrommel 2 übertragen wird. Die Eingangswelle 13 ist verdrehfest mit einem Sonnenrad 21 der ersten Planetenstufe 20 verbunden bzw. bildet das erste Sonnenrad 21. Mehrere über den Umfang des Sonnenrads 21 verteilte und mit dem Sonnenrad 21 kämmende Planetenräder 22 sind um ihrer jeweiligen Drehachsen drehbar an einem Planetenträger 24 der ersten Planetenstufe 20 angeordnet. Das Hohlrad 23 der ersten Planetenstufe 20 wird von dem zweiten Gehäuse 12 gebildet und kämmt mit den Planetenrädern 22. Die Drehung der Eingangswelle 13 relativ zu dem ersten Gehäuse 11 bewirkt somit, dass der Planetenträger 24 relativ zu dem ersten Gehäuse 11 und dem zweiten Gehäuse 12 um die Drehachse D dreht. Der Planetenträger 24 ist verdrehfest, wie z. B. über eine Wellen-Nabe-Verbindung mit einem Sonnenrad 31 einer zweiten Planetenstufe 30 verbunden. Mehrere über den Umfang des Sonnenrads 31 verteilte Planetenräder 32 kämmen mit dem Sonnenrad 31 und sind um ihre jeweiligen Drehachsen drehbar an den Planetenträger 34 der zweiten Planetenstufe 30 gelagert. Das Hohlrad 33 der zweiten Planetenstufe 30 wird von dem zweiten Gehäuse 12 gebildet und kämmt mit den Planetenrädern 32. Die von dem Planetenträger 24 auf das Sonnenrad 31 übertragene Drehbewegung bewirkt somit eine Drehbewegung des Planetenträgers 34 relativ zu dem ersten Gehäuse 11 und dem zweiten Gehäuse 12 um die Drehachse D.

Der Planetenträger 34 ist um die Drehachse D verdrehfest mit einem Sonnenrad 41 einer dritten Planetenstufe 40 verbunden, beispielsweise mittels einer Wellen-Nabe-Verbindung. Über den Umfang des Sonnenrads 41 sind mehrere Planetenräder 42 angeordnet, welche mit dem Sonnenrad 41 kämmen. Die Planetenräder 42 sind jeweils um ihre Drehachsen drehbar an dem ersten Gehäuse 11, welches somit als Planetenträger dient, gelagert. Das Hohlrad 43 der dritten Planetenstufe 40 wird von dem zweiten Gehäuse 12 gebildet und kämmt mit den Planetenrädern 42. Dies ist eine von mehreren Möglichkeiten, wie mit Hilfe von einer oder mehreren Planetenstufen 20, 30, 40 eine Drehung der Eingangswelle 13 untersetzt an den Windentrommel 2 übertragen werden kann. Andere Ausführungen, welche dem ähnlichen Zweck dienen sind natürlich denkbar.

Für das Getriebe 10 ist ein maximaler Flüssigkeitsstand Sₘₐₓ und ein minimaler Flüssigkeitsstand Sₘᵢₙ vorgesehen, wobei der Flüssigkeitsstand der Schmierflüssigkeit, d. h. die Position oder Höhe des Flüssigkeitsspiegels höher oder gleich Sₘᵢₙ oder niedriger oder gleich Sₘₐₓ sein soll, um eine ordnungsgemäße Funktion des Getriebes 10 sicherzustellen. Sₘₐₓ und Sₘᵢₙ sind so gewählt, dass jedes der Planetenräder 22, 32, 42 bei seinem vollen Umlauf um die Drehachse D zumindest teilweise unter den Flüssigkeitsspiegel des Schmiermittels eintaucht. Das in dem Aufnahmeraum 14 enthaltene Schmiermittel kann somit die in dem Aufnahmeraum 14 enthaltenen Getriebe- und Lagerkomponenten während des Betriebs schmieren. Das Getriebe 10 ist so ausgelegt, dass die Drehachse D horizontal oder in etwa horizontal in Bezug auf die Schwerkraftrichtung, die vertikal verläuft, angeordnet ist.

### Bremse

Das Getriebe 10 kann optional eine Bremse 50 aufweisen, welche stirnseitig an dem Austritt der Eingangswelle 13 aus dem ersten Gehäuse 11 an dem ersten Gehäuse 11 angeordnet oder befestigt ist. Die Bremse 50 dient als Betriebs- und/oder Haltebremse für die Eingangswelle 13 und somit mittelbar auch für die Windentrommel 2. Eine Betriebsbremse ist ausgelegt, die Windentrommel 2 aus der Drehung bis zum Stillstand abzubremsen. Eine Haltebremse 2 ist ausgelegt, die Windentrommel 2 im Stillstand sicher festzuhalten, insbesondere ein Kriechen zu vermeiden.

Die Bremse 50 weist ein Bremsgehäuse 51 auf, welches verdreh- und axialfest mit dem ersten Gehäuse 11 verbunden oder gefügt ist, beispielsweise mittels mehrerer Schraubenbolzen. In kinematischer Hinsicht kann das Bremsgehäuse 51 als Teil des ersten Gehäuses 11 betrachtet werden. Die Bremse 50 weist einen relativ zu dem Bremsgehäuse 51 drehbaren Rotor 52 auf, der um die Drehachse D verdrehfest, in diesem Beispiel mittels einer Welle-Nabe-Verbindung 54, mit der Eingangswelle 13 verbunden ist. Die Bremse 50 weist mehrere als Lamellen ausgestaltete erste Bremskörper 58a, die um die Drehachse D verdrehfest mit dem Bremsgehäuse 51 verbunden sind und mehrere als Lamellen ausgestaltete zweite Bremskörper 58b auf, die um die Drehachse D verdrehfest mit dem Rotor 52 verbunden sind. In Richtung der Drehachse D sind abwechselnd erste Bremskörper 58a und zweite Bremskörper 58b angeordnet. Das heißt zwischen zwei Bremskörpern 58a befindet sich ein Bremskörper 58b und zwischen zwei Bremskörpern 58b befindet sich ein Bremskörper 58a. Die Bremse 50 weist ferner ein Druckstück 55 auf, welches die ersten und zweiten Bremskörper 58a, 58b in Richtung der Drehachse D gegeneinander drücken kann. Je nachdem, wie stark das Druckstück 55 in die ersten und zweiten Bremskörper 58a, 58b gegeneinander drückt, wird ein Bremsmoment erzeugt, welches auf die Eingangswelle 13 wirkt. Zwischen dem Druckstück 55 und dem Bremsgehäuse 51 ist ein Druckraum 57 gebildet, der über einen Anschluss oder Kanal mit einem kompressiblen oder inkompressiblen Medium, wie z. B. Druckluft oder Hydraulikflüssigkeit bedruckbar oder entlüftbar ist. Mindestens eine Feder 56, in diesem Beispiel eine Schraubenfeder, stützt sich an dem Druckstück 55 ab und ist so vorgespannt, dass es das Druckstück 55 in Richtung der Bremskörper 58a, 58b drückt, wodurch die mindestens eine Feder 56 über das Druckstück 55 die ersten und zweiten Bremskörper 58a, 58b gegeneinander drückt, insbesondere so stark gegeneinander drückt, dass die Haltebedingung erfüllt ist und die Windentrommel 2 im Stillstand gehalten oder bis zum Stillstand abgebremst werden kann, insbesondere dann, wenn der Druckraum 57 entlüftet ist. Wenn der Druckraum 57 mit dem kompressiblen oder inkompressiblen Medium bedruckt wird, wird die Feder 56 gespannt oder das Druckstück 55 von den Bremskörpern 58a, 58b weg bewegt, wodurch die von dem Druckstück 55 auf die ersten und zweiten Bremskörper 58a, 58b ausgeübte Kraft verringert wird. Hierdurch kann die Bremse 50 gelöst werden.

### Befestigungsgehäuse/Motoranschluss

Das Getriebe 10 weist ein Befestigungsgehäuse 101 auf, welches einen Grundkörper für die optional vorgesehene Anzeigeeinrichtung 100 bildet. Das Befestigungsgehäuse 101 bildet eine Befestigungsmöglichkeit für einen Motor (nicht dargestellt), insbesondere in Form eines Flansches, an dem der Motor bzw. das Motorgehäuse angeflanscht oder befestigt werden kann, insbesondere mittels mehrerer Schraubenbolzen. Das Befestigungsgehäuse 101 ist um die Drehachse D verdrehfest und axialfest mit dem Bremsgehäuse 51 oder mit dem ersten Gehäuse 11 verbunden, insbesondere mittels mehreren Schraubenbolzen. In kinematischer Hinsicht kann das Befestigungsgehäuse 101 als zum Bremsgehäuse 51 oder zum ersten Gehäuse 11 gehörig angesehen werden. Das Befestigungsgehäuse 101 bildete eine insbesondere zylindrische Innenumfangsfläche, welches den zum Motor hin offenen Vorraum 17 einfasst. Ferner bildet das Befestigungsgehäuse eine Stirnwand, welche den Vorraum 17 zur Bremse 50 oder zum ersten Gehäuse 11 hin begrenzt. Die offene Seite des Vorraums wird durch den Motor oder ein Gehäuse des Motors begrenzt, wenn der Motor an dem Befestigungsgehäuse 101 befestigt ist. Der Motor weist eine Antriebs- oder Motorwelle auf, welche den Vorraum 17 durchragt, wenn der Motor an dem Befestigungsgehäuse 101 angeordnet ist. Beispielsweise mittels einer formschlüssigen Wellen-Nabe-Verbindung kann die Antriebswelle des Motors mit der Eingangswelle 13 direkt oder indirekt über den Rotor 52 der optional vorhandenen Bremse 50 verbunden sein. Sollte eine Bremse 50 nicht vorhanden sein, kann die Verbindung zwischen der Antriebswelle des Motors und der Eingangswelle 13 ebenfalls direkt oder indirekt, wie z. B. über ein Zwischenstück erfolgen. In dem in der Figur gezeigten Beispiel weist der Rotor 52, der formschlüssig verdrehfest mit der Antriebswelle 13 verbunden ist, ein erstes Verbindungselement 53a, wie z. B. eine Innenverzahnung auf, in die ein zweites Verbindungselement der Motorwelle, wie z. B. eine Außenverzahnung zur Bildung einer Welle-Nabe-Verbindung 53 formschlüssig eingreift.

Die Eingangswelle 13 und die Antriebswelle des Motors sind konzentrisch zur Drehachse D angeordnet und um diese drehbar. Der Rotor 52 kann einteilig oder mehrteilig sein.

In dem zwischen dem Rotor 52, insbesondere zwischen dem das erste Verbindungselement 53a bildenden Abschnitt des Rotors 52, und dem Befestigungsgehäuse 101 gebildeter Ringspalt ist ein Dichtring 112, beispielsweise in der Gestalt eines am Befestigungsgehäuse 101 befestigten Radial-Wellendichtrings, angeordnet, um den Vorraum 17 zu dem Aufnahmeraum 14 oder der Bremse 50 hin flüssigkeitsdicht abzudichten. Der Dichtring 112 ist konzentrisch um die Drehachse D angeordnet.

In dem in der Figur gezeigten Beispiel ist die von dem Rotor 52 und der Eingangswelle 13 gebildete Welle-Nabe-Verbindung 54 flüssigkeitskommunizierend mit dem Vorraum 17 verbunden. Ein Dichtring 59 dichtet den Spalt zwischen dem Rotor 52 und der Eingangswelle 13 ab, wobei die Welle-Nabe-Verbindung 54 zwischen dem Vorraum 17 und dem Dichtring 59 angeordnet ist. Der Dichtring 59 und die Welle-Nabe-Verbindung 54 kann statt einem Rotor 52 für die Bremse 50 an einem Verbindungsstück vorgesehen sein, beispielsweise wenn keine Bremse 50 an dieser Stelle vorgesehen ist.

Das erste Verbindungselement 53a oder die Welle-Nabe-Verbindung 53 ist flüssigkeitskommunizierend mit dem Vorraum 17 verbunden. Das Befestigungsgehäuse 101 kann ein oder mehrteilig ausgeführt sein.

Die Wand des Windengestells 3, an der das erste Gehäuse 11 befestigt ist, ist zwischen der Windentrommel 2 und dem Befestigungsgehäuse 101 angeordnet. Das heißt, dass die Windentrommel 2 auf einer Seite der Wand und das Befestigungsgehäuse 101 auf der anderen Seite der Wand angeordnet ist, wobei die Wand eine Öffnung aufweist, durch die das Getriebe 10 ragt, so dass das Befestigungsgehäuse 101 fest mit dem ersten Gehäuse 11 verbunden ist. In dem in der Figur gezeigten Beispiel ragt das Bremsgehäuse 51 durch die Öffnung der Wand und verbindet dort das Befestigungsgehäuse 101 mit dem ersten Gehäuse 11. Statt dem Bremsgehäuse 51 könnte auch allgemein ein Verbindungsabschnitt des Befestigungsgehäuses 101 oder des ersten Gehäuses 11 oder ein separates Verbindungsgehäuse durch die Öffnung der Wand ragen, insbesondere dann, wenn keine Bremse 50 an dieser Stelle vorgesehen ist.

### Schmiersystem/Fördereinrichtung

Grundsätzlich wäre es denkbar, dass der Vorraum 17 mit Schmiermittel, wie z. B. Schmieröl gefüllt ist, um die Welle-Nabe-Verbindung 53 und ggf. auch die Welle-Nabe-Verbindung 54 zu schmieren und dadurch vor Reibkorrosion zu schützen. Dadurch kann sich jedoch das Problem ergeben, dass sich das flüssige Schmiermittel im Vorraum 17 auf Temperaturen erwärmt, die das Schmiermittel und/oder den Dichtring 112 beeinträchtigen. Daher sieht das Getriebe 10 ein Schmiersystem vor, welches während des Betriebs des Getriebes 10 für einen kontinuierlichen Austausch des Schmiermittels im Vorraum 17 sorgt.

Das Schmiersystem bzw. das Getriebe 10 umfasst eine Fördereinrichtung 12a, 16, welche das Schmiermittel aus dem Aufnahmeraum 14 über einen Fluidzuführkanal 15 in den Vorraum 17 fördert. Die Fördereinrichtung 12a, 16 ist angepasst, das flüssige Schmiermittel über den maximalen Flüssigkeitsstand Sₘₐₓ zu fördern oder zu heben und in den Fluidzuführkanal 15 zu fördern. Die Fördereinrichtung 12a, 16 kann beispielsweise eine an sich bekannte Schmiermittelpumpe sein oder so ausgebildet sein, wie in der Figur gezeigt und weiter unten beschrieben wird. Der Fluidzuführkanal 15 weist mehrere Teilabschnitte auf, wobei zumindest ein Teilabschnitt in dem ersten Gehäuse 11 gebildet ist, insbesondere in der Gestalt von einer oder mehreren Bohrungen. Ein weiterer Teilabschnitt kann von dem Bremsgehäuse 51 oder einem alternativ vorhandenen Verbindungsabschnitt oder Verbindungsgehäuse gebildet werden. Der Teilabschnitt ist ebenfalls in der Gestalt einer Bohrung ausgeführt. Ein weiterer Teilabschnitt des Fluidzuführkanals 15 wird von dem Befestigungsgehäuse 101 gebildet. Der Fluidzuführkanal 15 mündet in den Vorraum 17 mit einer Eintrittsöffnung, die bevorzugt oberhalb eines Flüssigkeitsstands Sᵥₒᵣ im Vorraum 17 angeordnet ist.

Der Vorraum 17 ist über mindestens einen Fluidkanal 107, 106 mit dem Aufnahmeraum 14 verbunden, wobei der mindestens eine Fluidkanal 107, 106 bevorzugt unterhalb des minimalen Flüssigkeitsspiegels Sₘᵢₙ in den Vorraum 14 mündet. Die Austrittsöffnung des mindestens einen Fluidkanals 107, 106, mit der dieser aus dem Vorraum 107 führt, ist bevorzugt oberhalb des maximalen Flüssigkeitsstands Sₘₐₓ des Aufnahmeraums 14 angeordnet. Die Austrittsöffnung 107a und die Eintrittsöffnung in den Aufnahmeraum 14 sind über den mindestens einen Fluidkanal 107, 106 flüssigkeitskommunizierend verbunden.

Die Austrittsöffnung 107a ist oberhalb des untersten Punkts des ersten Verbindungselements 53a, vorzugsweise oberhalb des untersten Punkts der Welle-Nabe-Verbindung 54 angeordnet. Da durch die Fördereinrichtung 12a, 16 während der Drehung des Getriebes 10 Schmiermittel über den Fluidzuführkanal 15 in den Aufnahmeraum 17 gefördert wird und die Austrittsöffnung 107a als Überlauf wirkt, stellt sich in dem Aufnahmeraum 17 ein Flüssigkeitsstand Sᵥₒᵣ ein, der im Wesentlichen konstant und unabhängig von dem Flüssigkeitsstand im Aufnahmeraum 14 ist. Dadurch, dass die Austrittsöffnung 107a oberhalb des untersten Punkts der Wellen-Nabe-Verbindung 53 oder 54 angeordnet ist, wird sichergestellt, dass die Welle-Nabe-Verbindung 53, 54 mit Schmiermittel benetzt bzw. geschmiert wird, wodurch ein Verschleiß der Wellen-Nabe-Verbindungen 53, 54 vermieden wird. Außerdem wird durch den permanenten Austausch des Schmiermittels im Vorraum 17 während des Betriebs des Getriebes 10 verhindert, dass sich das Schmiermittel im Vorraum 17 auf Temperaturen erhitzt, die das Schmiermittel oder den Dichtring 112 beeinträchtigen können. Auch der Dichtring 112 liegt zumindest teilweise unterhalb des Flüssigkeitsstands Sᵥₒᵣ.

Optional kann die Austrittsöffnung 107a unterhalb des obersten Punkts des ersten Verbindungselements 53a bzw. der Welle-Nabe-Verbindung 53 und/oder unterhalb des obersten Punkts der Welle-Nabe-Verbindung 54 angeordnet sein. Dadurch wird erreicht, dass die von dem Vorraum 17 abgewandt an den Wellen-Nabe-Verbindungen 53, 54 liegenden Bereiche entlüftet werden können, wodurch eine bessere Schmierung der Wellen-Nabe-Verbindungen 53, 54 erzielt werden kann. Alternativ oder zusätzlich kann die Austrittsöffnung 107a oberhalb der Drehachse D angeordnet sein.

Der Flüssigkeitsstand in dem Aufnahmeraum 14 oder in dem Vorraum 17 kann beispielsweise in einer herkömmlichen Weise mit dem Ölmessstab, einem Schauzylinder oder einem Schauglas überprüft werden. Bevorzugt kann der Flüssigkeitsstand jedoch mit einer Anzeigeeinrichtung 100, wie sie in der Figur gezeigt und weiter unten beschrieben wird, anhand der Höhe oder der Position des Flüssigkeitsspiegels visuell abgelesen werden.

Ein Abschnitt des mindestens einen Fluidkanals 107, 106 ist beispielsweise in Gestalt einer oder mehrerer Bohrungen von dem Befestigungsgehäuse 101 gebildet. Ein Abschnitt des mindestens einem Fluidkanals 107, 106 kann von dem optional vorhandenen Bremsgehäuse 51 oder dem ersten Gehäuse 11 oder einem separaten Verbindungsgehäuse gebildet werden. Ein Abschnitt des Fluidkanals 107, 106 wird von dem ersten Gehäuse 11 gebildet, welches auch die Eintrittsöffnung in den Aufnahmeraum 14 bildet, die im Hinblick auf die in der Figur gezeigte Anzeigeeinrichtung 100 bevorzugt unter dem Flüssigkeitsstand Sₘᵢₙ angeordnet sein kann.

An dem zweiten Gehäuse 12 ist eine Förderfläche 12a gebildet, deren Flächennormale in etwa parallel zur Drehachse D weist und/oder sich insbesondere ringförmig um die Drehachse D erstreckt. Die Förderfläche 12a erstreckt sich teilweise unter den minimalen Flüssigkeitsspiegel Sₘᵢₙ, so dass bei einer Drehung des zweiten Gehäuses 12 um die Drehachse D die Förderfläche 12a durch das flüssige Schmiermittel im Aufnahmegehäuse 14 bewegt wird, wobei die Förderfläche 12a mit einem Schmiermittelfilm benetzt ist, wenn sie sich aus dem Schmiermittelsumpf heraus nach oben bewegt. Die Fördereinrichtung 12a, 16 weist außerdem einen Abstreifer 16 auf, der entlang der Drehachse D verschiebbar von dem ersten Gehäuse 11 gelagert ist. Zwischen dem ersten Gehäuse 11 und dem Abstreifer 16 ist eine Feder angeordnet, welche so vorgespannt ist, dass sie den Abstreifer 16 gegen die Förderfläche 12a drückt. Alternativ kann der Abstreifer mit einem, hier axialen, Spalt, der gleich oder kleiner als 4 mm, gleich oder kleiner als 3 mm oder gleich oder kleiner als 2 mm ist, von der Förderfläche beabstandet sein, wobei der Abstreifer 16 dann nicht von einer Feder vorgespannt sein braucht. Der Abstreifer 16 kann beispielsweise von dem ersten Gehäuse 11 gebildet oder verschiebefest mit dem ersten Gehäuse 11 gefügt sein. Der beim Durchlauf der Förderfläche 12a durch das Schmiermittel auf der Förderfläche 12a entstehende Schmiermittelfilm wird von dem Abstreifer 16 von der Förderfläche 12a abgestreift bzw. abgenommen. Der Fluidzuführkanal 15 ist in Bezug auf den Abstreifer 16 so angeordnet, dass das abgestreifte Schmiermittel in dem wenigstens einen Fluidzuführkanal 15 gelangt. Der Abstreifer 16 weist eine Wand 16a auf, deren Stirnseite an der Förderfläche 12a anliegt oder zwischen der und der Förderfläche 12a der Spalt besteht. Die Seitenfläche 16d der Wand 16a streift den Flüssigkeitsfilm von der Förderfläche 12a ab und führt ihn auf eine rinnenartige Fläche 16b, die sich von der Stirnseite, die an der Förderfläche 12a anliegt oder an der der Spalt angeordnet ist, zu dem Fluidzuführkanal 15 erstreckt, so dass abgestreifte Schmiermittel von der Seitenfläche 16d über die rinnenartige Fläche 16 in den Fluidzuführkanal 15 gelangt. Die Wand 16a weist beidseitig eine Seitenfläche 16d und eine rinnenartige Fläche 16b auf, wodurch das Schmiermittel sowohl beim Vorwärtslauf als auch beim Rückwärtslauf des Getriebes 10 von der Förderfläche 12a abgestreift und in den Fluidzuführkanal 15 gefördert wird. Der Fluidzuführkanal 15 mündet zu dem Ende des Abstreifers 16, welches der Stirnfläche, die an der Förderfläche 12a anliegt, entgegengesetzt ist. In der gezeigten Ausführung ist der Abstreifer 16 in einer zylindrischen Bohrung verschiebbar geführt, die in etwa konzentrisch zu dem Fluidzuführkanal 15 oder zu einer Bohrung des Fluidzuführkanals 15 angeordnet ist, der oder die in die zylindrische Bohrung mündet. Der Abstreifer 16 weist eine Basis 16c auf, welche die rinnenartige Fläche 16b und eine zylindermantelabschnittsförmige Führungsfläche bildet, die von der zylindrischen Bohrung geführt wird. Die Wand 16a bildet an ihrem von der Basis 16c abragenden Ende ebenfalls einen zylindermantelförmigen Abschnitt, die ebenfalls von der zylindrischen Bohrung geführt wird.

Optional kann das Getriebe 10 an dem Teil, an dem die Förderfläche 12a gebildet ist, oder an dem zweiten Gehäuseteil 12 oder einem Planetenträger eine oder mehrere insbesondere einseitig offene Förderzellen 12b aufweisen, die dazu ausgebildet sind, dass sie sich während des Durchlaufs durch das Schmiermittel füllen und Schmiermittel, insbesondere über die Öffnung, zu dem Abstreifer 16 oder der Förderfläche 12a hin abgeben. Dadurch kann noch mehr Schmiermittel gefördert und optional in den Fluidzuführkanal 15 geleitet werden als mit der Förderfläche 12a allein. Das Schmiermittel aus der mindestens einen Förderzelle 12b kann aufgrund der Schwerkraft und/oder der Zentrifugalkraft auf die Förderfläche 12a und/oder den Abstreifer 16 fließen oder abgegeben werden.

In dem gezeigten Beispiel sind mehrere um die Drehachse D verteilt angeordnete Förderzellen 12b gebildet. Jede der Förderzellen 12b ist zu ihren benachbarten Förderzellen 12b mittels jeweils einer insbesondere rippenförmigen Wand getrennt. Die Förderzellen 12b sind zu dem Abstreifer 16 oder der Förderfläche 12a oder dem Motor oder Vorraum 17 hin einseitig offen, damit das Schmiermittel aus den Förderzellen 12b dorthin abgegeben werden kann. Die Förderzellen 12b sind außenumfangsseitig der Förderfläche 12a angeordnet. Die Förderzellen 12b können beispielsweise in einer Hinterschneidung des zweiten Gehäuses 12, die zwischen dem Abschnitt des zweiten Gehäuses 12, der den Lagersitz für das Wälzlager 19 bildet, und dem Abschnitt der die Außenwand des zweiten Gehäuses 12 bildet angeordnet sein.

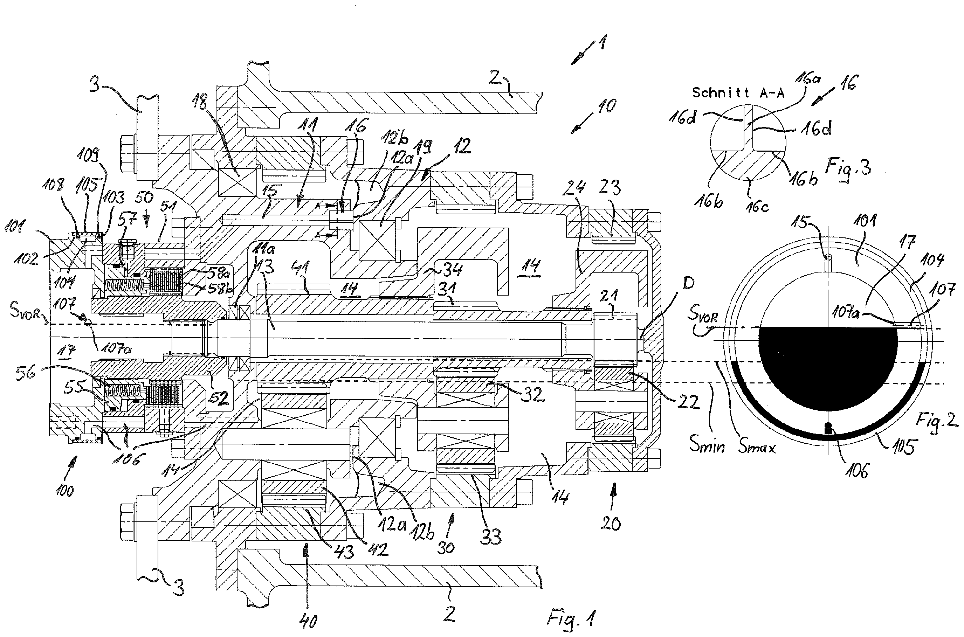

In einer Variante mit einem Auffänger (nicht gezeigt), die beispielsweise ohne Förderfläche 12a und/oder Abstreifer 16 auskommen kann, können die eine oder mehreren Förderzellen 12b wie in der Figur 1 dargestellt angeordnet sein. Der Auffänger kann an dem ersten Gehäuse 11 angeordnet oder davon gebildet und in Bezug auf die mindestens eine Förderzelle 12b so angeordnet sein, dass aus der zu dem Auffänger hin offenen Förderzelle 12b Schmiermittel an den Auffänger fließen oder abgeben werden kann. Der Auffänger kann flüssigkeitskommunizierend mit dem Fluidzuführkanal 15 verbunden sein bzw. der Flüssigkeitszuführkanal 15 kann in den Auffänger münden. Die hierin beschriebenen Ausgestaltungen für die Variante zum zweiten Aspekt gelten für das Ausführungsbeispiel aus der Figur 1 entsprechend.

### Anzeigeeinrichtung

Das Befestigungsgehäuse 101 bildet oder umfasst einen Grundkörper 101, der eine erste Sitzfläche 102 und eine zweite Sitzfläche 103 bildet, die sich über den Umfang des Grundkörpers 101, insbesondere konzentrisch, um die Drehachse D erstrecken, in dem gezeigten Beispiel kreisringförmig. Zwischen der ersten Sitzfläche 102 und der zweiten Sitzfläche 103 ist eine sich über den Umfang des Grundkörpers 101, insbesondere kreisringförmig erstreckende Vertiefung 104 angeordnet. Die Vertiefung 104 ist in dem gezeigten Beispiel eine Nut oder Ringnut, die sich um die Drehachse D erstreckt. Ein transparenter Abdeckring 105, beispielsweise aus Glas oder PMMA, der die erste Sitzfläche 102, die zweite Sitzfläche 103 und die Vertiefung 104 über den Umfang umgibt, begrenzt die Vertiefung 104 über ihren Umfang. Der Abdeckring 105 kann vollständig oder zumindest abschnittsweise transparent sein. Der Abdeckring kann mindestens an der oder den Stellen transparent sein, an dem später ein Flüssigkeitsspiegel abgelesen werden soll. Der Abdeckring 105 umgibt die erste Sitzfläche 102, die zweite Sitzfläche 103 und die Vertiefung 104 über deren Umfang. Der Abdeckring 105 begrenzt die als Nut ausgestaltete Vertiefung 104, die radial von der Drehachse D wegweisend offen ist. Der von der Vertiefung 104 zwischen den seitlichen Nutflanken 104a, 104b und den Nutgrund 114 und dem Abdeckring 105 eingefasste Ringraum dient zur Aufnahme des flüssigen Schmiermittels, dessen Flüssigkeitsstand oder dessen Position des Flüssigkeitsspiegels von außen durch den Abdeckring 105 hindurch visuell abgelesen werden soll. Die Sitzflächen 102, 103 können als Dichtflächen ausgebildet sein oder mit dem Innenumfang des Abdeckrings 105 verklebt sein, wodurch verhindert wird, dass das flüssige Schmiermittel durch den Fügespalt zwischen den Sitzflächen 102, 103 und dem Innenumfang des Abdeckrings aus der Vertiefung an die Umgebung abgegeben werden kann. In den gezeigten Beispielen sind an der ersten Sitzfläche 102 und an der zweiten Sitzfläche 103 jeweils ein Dichtring 108, 109 angeordnet, die sich mit den Sitzflächen 102, 103 über den Umfang und/oder um die Drehachse D erstreckt. In den gezeigten Beispielen dienen die Dichtringe 108, 109 zur Abdichtung des Fügespalts zwischen den Sitzflächen 102, 103 nach außen. Der Dichtring 108, 109 sitzt in einer Ringnut, die in der ersten Sitzfläche 108 bzw. zweiten Sitzfläche 109 gebildet ist und sich über den Umfang der Sitzflächen 102, 103 erstreckt. Dadurch wird eine Montage des Abdeckrings 105 am Grundkörper 101 erleichtert, da verhindert wird, dass die Dichtringe 108, 109 beim Aufschieben des Abdeckrings 105 in Richtung der Drehachse D über die zweite Sitzfläche 103, die Vertiefung 104 und die erste Sitzfläche 102 verschoben werden, wodurch Dichtigkeitsprobleme vermieden werden können.

Der Grundkörper 101 bildet eine Stirnfläche, an der eine axiale Stirnfläche des Abdeckrings 105 anliegt und die die erste Sitzfläche 102 begrenzt. Ein ringförmiger Deckel, der eine zweite Stirnwand 111 bildet, ist vorgesehen, um den Abdeckring 105 zwischen der ersten Stirnwand 110 und der zweiten Stirnwand 111 einzufassen, um eine Verschiebung des Abdeckrings 105 relativ zu dem Grundkörper 101 in Richtung der Drehachse D zu verhindern.

Der Fluidkanal 106 mündet mit einer Öffnung in den Nutgrund oder allgemein in die Vertiefung 104 und andererseits mit einer Öffnung in den Aufnahmeraum 14, so dass der Aufnahmeraum 14 und der von der Vertiefung 104 gebildete Raum flüssigkeitskommunizierend verbunden sind. Die Öffnungen liegen unterhalb des minimalen Flüssigkeitsstands, so dass sich der Flüssigkeitsstand in der Anzeigeeinrichtung und der Flüssigkeitsstand in dem Aufnahmeraum 14 nach dem hydrostatischen Paradoxon aneinander angleichen. Dadurch kann der Flüssigkeitsstand des in den Ringraum befindlichen flüssigen Schmiermittels durch den Abdeckring 105 visuell abgelesen werden. Aufgrund der Tatsache, dass sich der Flüssigkeitsspiegel im Ringraum und der Flüssigkeitsspiegel in dem Aufnahmeraum 14 aneinander angleichen, kann somit an der Anzeigeeinrichtung 100 der Flüssigkeitsstand im Aufnahmeraum 14 ermittelt werden. Der von der Vertiefung 104 gebildete Ringraum und der Vorraum 17 sind über einen Fluidkanal 107 flüssigkeitskommunizierend verbunden. Der Fluidkanal 107 wird von dem Grundkörper 101 gebildet oder ist oder umfasst eine Bohrung im Grundkörper 101. Die Austrittsöffnung 107a ist zweckmäßigerweise so angeordnet wie weiter oben beschrieben wurde. Die Eintrittsöffnung des Fluidkanals 107 in die Vertiefung 104 kann auf gleicher Höhe wie die Eintrittsöffnung 107a oder weiter unten liegen, beispielsweise unterhalb des maximalen Flüssigkeitsstands oder des minimalen Flüssigkeitsstands. Sofern die Eintrittsöffnung in die Vertiefung 104 oberhalb des maximalen Flüssigkeitsstands Sₘₐₓ liegt kann über den Abdeckring 105 vorteilhaft und zusätzlich zu der Ermittlung des Flüssigkeitsspiegels festgestellt werden, ob Schmiermittel aus dem Vorraum 17 in den Ringraum fließt, wodurch festgestellt werden kann, ob das Schmiersystem ordnungsgemäß funktioniert. Das aus dem Vorraum 17 in den Ringraum fließende Schmiermittel führt zu keiner oder zu keiner wesentlichen Erhöhung des Flüssigkeitsstands, da sich der Flüssigkeitsstand in der Anzeigeeinrichtung 100 und der Flüssigkeitsstand in dem Aufnahmeraum 14 dadurch angleichen, dass Flüssigkeit aus dem Ringraum über dem Fluidkanal 106 in den Aufnahmeraum 14 fließt. Beispielsweise kann es vorteilhaft sein, dass der insbesondere kleinste Strömungsquerschnitt des Fluidkanals 106 größer ist als der, insbesondere kleinste Strömungsquerschnitt des Fluidkanals 107.

Die Anzeigeeinrichtung 100, insbesondere der Abdeckring 105 kann eine Markierung für den minimalen Flüssigkeitsstand und/oder eine Markierung für den maximalen Flüssigkeitsstand aufweisen, wodurch auf eine einfache Weise festgestellt werden kann, ob sich der Flüssigkeitsstand in der Anzeigeeinrichtung 100 und in dem Aufnahmeraum 14 im Soll, d. h. zwischen Sₘᵢₙ und Sₘₐₓ befinden. Sollte dies nicht der Fall sein, kann durch Hinzufügen oder Entnehmen von Schmiermittel in das oder aus dem Getriebe 10 der Flüssigkeitsstand wieder ins Soll gebracht werden. Ein besonderer Vorteil der in der Figur gezeigten Anzeigeeinrichtung 100 ist, dass der Flüssigkeitsstand von zwei Seiten her abgelesen werden kann.

**Bezugszeichenliste**

| | | | |
|---|---|---|---|
| 1 | Seilwinde | 50 | Bremseinrichtung |
| 2 | Windentrommel | 51 | Bremsgehäuse |
| 3 | Windengestell | 52 | Rotor |
| | | 53 | Welle-Na be-Verbindung |
| 10 | Getriebe | 53a | erstes Verbindungselement |
| 11 | erstes Gehäuse | 54 | Welle-Nabe-Verbindung |
| 11a | Dichtring | 55 | Druckstück |
| 12 | zweites Gehäuse | 56 | Feder |
| 12a | Förderfläche | 57 | Druckraum |
| 12b | Förderzelle | 58a | erster Bremskörper/Lamellen |
| 13 | Antriebswelle | 58b | zweiter Bremskörper/Lamellen |
| 14 | Aufnahmeraum | 59 | Dichtring |
| 15 | Fluidzuführkanal | | |
| 16 | Abstreifer | 100 | Anzeigeeinrichtung |
| 16a | Wand | 101 | Grundkörper/Befestigungsgehäuse |
| 16b | rinnenartige Fläche | 102 | erste Sitzfläche |
| 16c | Basis | 103 | zweite Sitzfläche |
| 16d | Seitenfläche | 104 | Vertiefung/Nut/Ringnut |
| 17 | Vorraum | 104a | erste Nutflanke |
| 18 | Wälzlager | 104b | zweite Nutflanke |
| 19 | Wälzlager | 104c | Nutgrund |
| | | 105 | Abdeckring |
| 20 | erste Planetenstufe | 106 | Fluidkanal |
| 21 | Sonnenrad | 107 | Fluidkanal/Ablaufkanal |
| 22 | Planetenrad | 107a | Austrittsöffnung |
| 23 | Hohlrad | 108 | Dichtung/Dichtring |
| 24 | Planetenträger | 109 | Dichtung/Dichtring |
| 30 | zweite Planetenstufe | 110 | erste Stirnwand |
| 31 | Sonnenrad | 111 | zweite Stirnwand |
| 32 33 | Planetenrad Hohlrad | 112 | Dichtring |
| 34 | Planetenträger | D | Drehachse |
| | | Sₘₐₓ | maximaler Flüssigkeitsstand |
| 40 | dritte Planetenstufe | Sₘᵢₙ | minimaler Flüssigkeitsstand |
| 41 | Sonnenrad | Sᵥₒᵣ | Flüssigkeitsstandvorraum |
| 42 | Planetenrad | | |
| 43 | Hohlrad | | |

## Patentansprüche

1. Getriebe (10), insbesondere für eine Winde oder Seilwinde (1), wobei das Getriebe (10) umfasst:
a) ein erstes Gehäuse (11) und eine Eingangswelle (13), die relativ zu dem ersten Gehäuse (11) um eine Drehachse (D) drehbar ist,
b) ein zweites Gehäuse (12), das relativ zu dem ersten Gehäuse (11) um die Drehachse (D) drehbar an dem ersten Gehäuse (11) gelagert ist, und
c) mindestens eine Planetenstufe (20, 30, 40), welche die Eingangswelle (13) kinematisch so mit dem zweiten Gehäuse (12) verbindet, dass eine Drehung der Eingangswelle (13) eine Drehung des zweiten Gehäuses (12) relativ zu dem ersten Gehäuse (11) um die Drehachse (D) bewirkt, wobei das erste Gehäuse (11) und das zweite Gehäuse (12) einen Aufnahmeraum (14) einfassen, in dem ein flüssiges Schmiermittel und die mindestens eine Planetenstufe (20, 30, 40) angeordnet sind,
**dadurch gekennzeichnet, dass**
d) der maximale Flüssigkeitsstand (Sₘₐₓ) und der minimale Flüssigkeitsstand (Sₘᵢₙ) für das flüssige Schmiermittel so festgelegt sind, dass die mindestens eine Planetenstufe (20, 30, 40) zumindest teilweise unter den Flüssigkeitsspiegel des Schmiermittels getaucht ist, wenn sich dieser zwischen dem maximalen Flüssigkeitsstand (Sₘₐₓ) und dem minimalen Flüssigkeitstand (Sₘᵢₙ) befindet,
und dass das Getriebe (10) ferner umfasst:
e) ein in Bezug auf das erste Gehäuse (11) feststehendes Befestigungsgehäuse (101), welches ausgebildet ist, um daran einen Antriebsmotor für das Getriebe (10) zu befestigen, und welches einen zum Antriebsmotor hin offenen Vorraum (17) einfasst, wobei die Eingangswelle (13) um die Drehachse (D) verdrehfest mit einem ersten Verbindungselement (53a) einer Welle-Nabe-Verbindung (53) verbunden ist, wobei die Antriebswelle des Antriebsmotors um die Drehachse (D) verdrehfest mit dem ersten Verbindungselement (53a) verbindbar ist,
f) einen Fluidkanal (107), über den der Vorraum (17) fluidkommunizierend mit dem Aufnahmeraum (14) verbunden ist und welcher eine Austrittsöffnung (107a) aufweist, mit welcher der Fluidkanal (107) aus dem Vorraum (17) führt, wobei die Austrittsöffnung (107a) oberhalb des maximalen Flüssigkeitsstands (Sₘₐₓ) und oberhalb des untersten Punkts des ersten Verbindungselements (53a) angeordnet ist,
g) eine Fördereinrichtung (12a, 12b, 16), welche das Schmiermittel aus dem Aufnahmeraum (14) über mindestens einen Fluidzuführkanal (15) in den Vorraum (17) fördert, wobei sich durch die Position der Austrittsöffnung (17a) ein Flüssigkeitsspiegel in dem Vorraum (17) einstellt, der oberhalb des maximalen Flüssigkeitsstands (Sₘₐₓ) liegt, wobei das erste Verbindungselement (53a) sich zumindest teilweise unter dem Flüssigkeitsspiegel im Vorraum (17) befindet.

2. Getriebe (10) nach dem vorhergehenden Anspruch, **dadurch gekennzeichnet, dass** das Befestigungsgehäuse (101) einen Flansch umfasst, an den der Antriebsmotor angeflanscht werden kann.

3. Getriebe (10) nach einem der vorhergehenden Ansprüche, **dadurch gekennzeichnet, dass** das Befestigungsgehäuse (101) eine sich um die Drehachse (D) der Eingangswelle (13) erstreckende Umfangswand, die den Vorraum (17) mit ihrem Innenumfang einfasst oder begrenzt, und eine den Vorraum (17) axial begrenzende Stirnwand aufweist, wobei das erste Verbindungselement (53a) in dem Vorraum (17) angeordnet ist oder über eine zur offenen Seite des Vorraums (17) hin weisende Öffnung in der Stirnwand mit dem Vorraum (17) flüssigkeitskommunizierend verbunden ist.

4. Getriebe (10) nach einem der vorhergehenden Ansprüche, **dadurch gekennzeichnet, dass** der maximale Flüssigkeitsstand (Sₘₐₓ) unterhalb der Drehachse (D) der Eingangswelle (13) angeordnet ist und dass die Austrittsöffnung (107a), mit der der Fluidkanal (107) aus dem Vorraum (17) führt, zumindest oberhalb des maximalen Flüssigkeitsstands (Sₘₐₓ), vorzugsweise auf Höhe oder oberhalb der Drehachse (D) der Eingangswelle (13), und/oder unterhalb des obersten Punkts des ersten Verbindungselements (53a) angeordnet ist.

5. Getriebe (10) nach einem der vorhergehenden Ansprüche, **dadurch gekennzeichnet, dass** der zwischen dem das erste Verbindungselement (53a) bildenden Körper und dem Befestigungsgehäuse (101) gebildete Spalt mittels einer ringförmigen Dichtung (112) abgedichtet ist, wobei die Austrittsöffnung (107a) oberhalb des untersten Punkts und/oder unterhalb des obersten Punkts der Dichtung (112) angeordnet ist, wobei die Dichtung (12) beispielsweise ein um die Drehachse (D) verdrehfest an dem Verbindungsgehäuse (101) befestigter Wellendichtring oder Radial-Wellendichtring ist.

6. Getriebe (10) nach einem der vorhergehenden Ansprüche, **dadurch gekennzeichnet, dass** zwischen dem ersten Gehäuse (11) und dem Befestigungsgehäuse (101) eine Bremse (50) angeordnet ist, die ein in Bezug auf das erste Gehäuse (11) und das Befestigungsgehäuse (101) feststehendes Bremsgehäuse (51) und einen relativ zu dem Bremsgehäuse (51) drehbaren Rotor (52) aufweist, wobei der Rotor (52) um die Drehachse (D) verdrehfest mit der Eingangswelle (13) und dem ersten Verbindungselement (53a) verbunden ist, wobei die Bremse (50) mindestens einen ersten um die Drehachse (D) verdrehfest mit dem Bremsgehäuse (51) verbundenen Bremskörper (58a), mindestens einen zweiten um die Drehachse (D) verdrehfest mit dem Rotor (51) verbundenen Bremskörper (58b) und ein Druckstück (55) aufweist, welches den mindestens einen ersten Bremskörper (58a) und den mindestens einen zweiten Bremskörper (58b) in Richtung der Drehachse (D) gegeneinander drücken kann, wobei das Getriebe (10) insbesondere einen Druckraum (57) aufweist, wobei eine in Richtung der Drehachse (D) weisende Wand des Drückstücks (55) eine axiale Begrenzung des Druckraums (57) bildet, wobei die Bremse (50) ferner mindestens eine Feder (56) umfasst, welche so vorgespannt ist, dass das Druckstück (55) den mindestens einen ersten Bremskörper (58a) und den mindestens einen zweiten Bremskörper (58b) gegeneinander drückt, wenn der Druckraum (57) entlüftet ist, wobei die Feder (56) gespannt und die von dem Druckstück (55) auf die ersten und zweiten Bremskörper (58a, 58b) ausgeübte Kraft verringert wird, wenn der Druckraum (57) bedruckt wird.

7. Getriebe (10) nach dem vorhergehenden Anspruch, **dadurch gekennzeichnet, dass** das Bremsgehäuse (51) einen Abschnitt des mindestens einen zwischen der Fördereinrichtung (12a, 12b, 16) und dem Vorraum (17) angeordneten Fluidzuführkanals (15) und/oder einen Abschnitt des zwischen dem Vorraum (17) und dem Aufnahmeraum (14) angeordneten mindestens einen Fluidkanals (107, 106, 104) aufweist.

8. Getriebe (10) nach einem der zwei vorhergehenden Ansprüche, **dadurch gekennzeichnet, dass** der zwischen dem ersten Gehäuse (11) und der Eingangswelle (13) gebildete Spalt vom Aufnahmeraum (14) zur Bremse (50) hin mittels einer ringförmigen Dichtung (11a) abgedichtet ist.

9. Getriebe (10) nach einem der drei vorhergehenden Ansprüche, **dadurch gekennzeichnet, dass** der Rotor (52) und die Eingangswelle (13) mittels einer formschlüssigen Welle-Nabe-Verbindung (54) verbunden sind, die flüssigkeitskommunizierend mit dem Vorraum (17) in Verbindung steht, wobei ein zwischen dem Rotor (52) und der Eingangswelle (13) gebildeter Spalt mittels einer ringförmigen Dichtung (59) abgedichtet ist und die Welle-Nabe-Verbindung (54) zwischen dem Spalt und dem Vorraum (17) oder der Dichtung (59) und dem Vorraum (17) angeordnet ist.

10. Getriebe (10) nach einem der vorhergehenden Ansprüche, **dadurch gekennzeichnet, dass** das zweite Gehäuse (12) einen Teil des ersten Gehäuses (11) umgibt, und
die mindestens eine Planetenstufe (20, 30, 40) die Eingangswelle (13) kinematisch so mit einer ringförmig um die Drehachse umlaufenden Förderfläche (12a) verbindet, dass eine Drehung (D) der Eingangswelle (13) eine Drehung der Förderfläche (12a) relativ zu dem ersten Gehäuse (11) um die Drehachse (D) bewirkt, wobei
die Förderfläche (12a) in dem Aufnahmeraum (14) angeordnet ist, wobei der maximale Flüssigkeitsstand (Sₘₐₓ) und der minimale Flüssigkeitsstand (Sₘᵢₙ) für den flüssigen Schmierstoff so festgelegt sind, dass die Förderfläche (12a) zumindest teilweise unter den Flüssigkeitsspiegel des Schmiermittels getaucht ist, wenn sich dieser zwischen dem maximalen Flüssigkeitsstand (Sₘₐₓ) und dem minimalen Flüssigkeitsstand (Sₘᵢₙ) befindet, und
wobei ein Abstreifer (16) an dem ersten Gehäuse (11) angeordnet ist und an der Förderfläche (12a) anliegt oder von der Förderfläche (12a) mit einem Spalt beabstandet ist, wodurch ein Schmiermittelfilm auf der Förderfläche (12a), der beim Durchlauf der Förderfläche (12a) durch das Schmiermittel entsteht, mittels des Abstreifers (16) von der Förderfläche (12a) abgestreift wird, wobei der wenigstens eine, insbesondere von dem ersten Gehäuse (11) gebildete, Fluidzuführkanal (15) in Bezug auf den Abstreifer (16) so angeordnet ist, dass Schmiermittel von dem Abstreifer (16) in den wenigstens einen Fluidzuführkanal (15) gelangt.

11. Getriebe (10) nach dem vorhergehenden Anspruch, **dadurch gekennzeichnet, dass** der Abstreifer (16) einen federnd gelagerten Abschnitt aufweist, der durch die Federkraft gegen die Förderfläche (12a) gedrückt wird, oder dass zwischen Abstreifer (16) und erstem Gehäuse (11) eine Feder angeordnet ist, die den Abstreifer (16) gegen die Förderfläche (12a) drückt, oder dass die Breite des Spalts kleiner als oder gleich 4 mm, vorzugsweise kleiner oder gleich 3 mm, ist.

12. Getriebe (10) nach einem der zwei vorhergehenden Ansprüche, **dadurch gekennzeichnet, dass** der Abstreifer (16) eine Wand (16a), die an der Förderfläche (12a) anliegt oder zwischen der und der Förderfläche (12a) der Spalt gebildet ist, und zumindest auf einer Seite und unterhalb der Wand (16a) eine Rinne (16b) aufweist, welche zu dem Fluidzuführkanal (15) führt.

13. Getriebe (10) nach einem der drei vorhergehenden Ansprüche, **dadurch gekennzeichnet, dass** der mindestens eine Fluidzuführkanal (15) Teil einer Umlaufschmierung (15, 17, 107, 106, 14) ist, mit der das von dem Abstreifer (16) in den Fluidzuführkanal (15) gelangende Schmiermittel, insbesondere das von der Förderfläche (12a) abgestreifte Schmiermittel, wieder in den Aufnahmeraum (14) geführt wird.

14. Getriebe (10) nach einem der vier vorhergehenden Ansprüche, **dadurch gekennzeichnet, dass** die Förderfläche (12) von einem Planetenträger (24, 34) der mindestens einen Planetenstufe (20, 30, 40) oder von dem zweiten Gehäuse (12) gebildet wird, insbesondere von einer Stirnfläche.

15. Getriebe (10) nach einem der fünf vorhergehenden Ansprüche, **dadurch gekennzeichnet, dass** an dem Teil, an dem die Förderfläche (12a) gebildet ist, außenumfangsseitig der Förderfläche (12a) eine oder mehrere zu der Förderfläche (12a) hin offene Förderzellen (12b) gebildet sind, die dazu ausgebildet sind, dass sie sich während des Durchlaufs durch das Schmiermittel füllen und Schmiermittel zu dem Abstreifer (16) oder der Förderfläche (12a) hin abgeben.

## Claims

1. A gearing (10), in particular for a winch or cable winch (1), wherein the gearing (10) comprises:
a) a first housing (11) and an input shaft (13) which can be rotated relative to the first housing (11) about a rotational axis (D);
b) a second housing (12) which is mounted on the first housing (11) such that it can be rotated relative to the first housing (11) about the rotational axis (D); and
c) at least one planetary stage (20, 30, 40) which kinematically connects the input shaft (13) to the second housing (12) such that rotating the input shaft (13) generates a rotation of the second housing (12) relative to the first housing (11) about the rotational axis (D), wherein the first housing (11) and the second housing (12) enclose an accommodating space (14) in which a liquid lubricant and the at least one planetary stage (20, 30, 40) are arranged,
**characterised in that**
d) the maximum liquid level (Sₘₐₓ) and the minimum liquid level (Sₘᵢₙ) for the liquid lubricant are defined such that the at least one planetary stage (20, 30, 40) is at least partially submerged below the liquid surface of the lubricant when said liquid surface is situated between the maximum liquid level (Sₘₐₓ) and the minimum liquid level (Sₘᵢₙ),
and **in that** the gearing (10) further comprises:
e) a fastening housing (101) which is fixed in relation to the first housing (11) and embodied to fasten to it a drive motor for the gearing (10), and which encloses an antechamber (17) which is open towards the drive motor, wherein the input shaft (13) is connected, non-rotationally about the rotational axis (D), to a first connecting element (53a) of a shaft-hub connection (53), wherein the drive shaft of the drive motor can be connected, non-rotationally about the rotational axis (D), to the first connecting element (53a);
f) a fluid channel (107) via which the antechamber (17) is connected to and in fluid communication with the accommodating space (14) and which comprises an outlet opening (107a) via which the fluid channel (107) leads out of the antechamber (17), wherein the outlet opening (107a) is arranged above the maximum liquid level (Sₘₐₓ) and above the lowermost point of the first connecting element (53a);
g) a conveying means (12a, 12b, 16) which conveys the lubricant from the accommodating space (14) into the antechamber (17) via at least one fluid supply channel (15), wherein a liquid surface in the antechamber (17) which is above the maximum liquid level (Sₘₐₓ) is set by the position of the outlet opening (107a), wherein the first connecting element (53a) is situated at least partially below the liquid surface in the antechamber (17).

2. The gearing (10) according to the preceding claim, **characterised in that** the fastening housing (101) comprises a flange onto which the drive motor can be flange-mounted.

3. The gearing (10) according to any one of the preceding claims, **characterised in that** the fastening housing (101) comprises: a circumferential wall which extends around the rotational axis (D) of the input shaft (13) and encloses or delineates the antechamber (17) at its inner circumference; and an end-facing wall which axially delineates the antechamber (17), wherein the first connecting element (53a) is arranged in the antechamber (17) or is connected to and in liquid communication with the antechamber (17) via an opening in the end-facing wall which points towards the open side of the antechamber (17).

4. The gearing (10) according to any one of the preceding claims, **characterised in that** the maximum liquid level (Sₘₐₓ) is arranged below the rotational axis (D) of the input shaft (13), and **in that** the outlet opening (107a) via which the fluid channel (107) leads out of the antechamber (17) is arranged at least above the maximum liquid level (Sₘₐₓ), preferably level with or above the rotational axis (D) of the input shaft (13), and/or below the uppermost point of the first connecting element (53a).

5. The gearing (10) according to any one of the preceding claims, **characterised in that** the gap formed between the fastening housing (101) and the body forming the first connecting element (53a) is sealed off by means of an annular gasket (112), wherein the outlet opening (107a) is arranged above the lowermost point and/or below the uppermost point of the gasket (112), wherein the gasket (112) is for example a shaft sealing ring or radial shaft sealing ring which is fastened, non-rotationally about the rotational axis (D), to a connecting housing.

6. The gearing (10) according to any one of the preceding claims, **characterised in that** a brake (50) is arranged between the first housing (11) and the fastening housing (101) and comprises a brake housing (51), which is fixed in relation to the first housing (11) and the fastening housing (101), and a rotor (52) which can be rotated relative to the brake housing (51), wherein the rotor (52) is connected, non-rotationally about the rotational axis (D), to the input shaft (13) and the first connecting element (53a), wherein the brake (50) comprises: at least one first brake body (58a) which is connected, non-rotationally about the rotational axis (D), to the brake housing (51); at least one second brake body (58b) which is connected, non-rotationally about the rotational axis (D), to the rotor (52); and a pressure piece (55) which can press the at least one first brake body (58a) and the at least one second brake body (58b) against each other in the direction of the rotational axis (D), wherein the gearing (10) in particular comprises a pressure space (57), wherein a wall of the pressure piece (55) which points in the direction of the rotational axis (D) forms an axial delineation of the pressure space (57), wherein the brake (50) further comprises at least one spring (56) which is biased such that the pressure piece (55) presses the at least one first brake body (58a) and the at least one second brake body (58b) against each other when the pressure space (57) is evacuated, wherein the spring (56) is tensed and the force exerted by the pressure piece (55) on the first and second brake bodies (58a, 58b) is reduced when the pressure space (57) is pressurised.

7. The gearing (10) according to the preceding claim, **characterised in that** the brake housing (51) comprises a section of the at least one fluid supply channel (15) arranged between the conveying means (12a, 12b, 16) and the antechamber (17) and/or a section of the at least one fluid channel (107, 106, 104) arranged between the antechamber (17) and the accommodating space (14).

8. The gearing (10) according to any one of the preceding two claims, **characterised in that** the gap formed between the first housing (11) and the input shaft (13) is sealed off from the accommodating space (14) towards the brake (50) by means of an annular gasket (11a).

9. The gearing (10) according to any one of the preceding three claims, **characterised in that** the rotor (52) and the input shaft (13) are connected by means of a positive-fit shaft-hub connection (54) which is connected to and in liquid communication with the antechamber (17), wherein a gap formed between the rotor (52) and the input shaft (13) is sealed off by means of an annular gasket (59), and the shaft-hub connection (54) is arranged between the gap and the antechamber (17) or between the gasket (59) and the antechamber (17).

10. The gearing (10) according to any one of the preceding claims, **characterised in that** the second housing (12) surrounds a part of the first housing (11), and
the at least one planetary stage (20, 30, 40) kinematically connects the input shaft (13) to a conveying surface (12a) which annularly encircles the rotational axis (D), such that rotating the input shaft (13) generates a rotation of the conveying surface (12a) relative to the first housing (11) about the rotational axis (D), wherein
the conveying surface (12a) is arranged in the accommodating space (14), wherein the maximum liquid level (Sₘₐₓ) and the minimum liquid level (Sₘᵢₙ) for the liquid lubricant are defined such that the conveying surface (12a) is at least partially submerged below the liquid surface of the lubricant when said liquid surface is situated between the maximum liquid level (Sₘₐₓ) and the minimum liquid level (Sₘᵢₙ), and wherein a wiper (16) is arranged on the first housing (11) and abuts the conveying surface (12a) or is spaced from the conveying surface (12a) by a gap, whereby a film of lubricant on the conveying surface (12a), which is produced as the conveying surface (12a) passes through the lubricant, is wiped off the conveying surface (12a) by means of the wiper (16), wherein the at least one fluid supply channel (15), which is in particular formed by the first housing (11), is arranged in relation to the wiper (16) such that lubricant passes from the wiper (16) into the at least one fluid supply channel (15).

11. The gearing (10) according to the preceding claim, **characterised in that** the wiper (16) comprises a spring-mounted section which is pressed against the conveying surface (12a) by the spring force, or **in that** a spring is arranged between the wiper (16) and the first housing (11) and presses the wiper (16) against the conveying surface (12a), or **in that** the width of the gap is less than or equal to 4 mm, preferably less than or equal to 3 mm.

12. The gearing (10) according to any one of the preceding two claims, **characterised in that** the wiper (16) comprises: a wall (16a) which abuts the conveying surface (12a) or between which and the conveying surface (12a) the gap is formed; and a groove (16b) below the wall (16a) at least on one side, which leads to the fluid supply channel (15).

13. The gearing (10) according to any one of the preceding three claims, **characterised in that** the at least one fluid supply channel (15) is part of a circulatory lubrication (15, 17, 107, 106, 14) using which the lubricant which passes from the wiper (16) into the fluid supply channel (15), in particular the lubricant which is wiped off the conveying surface (12a), is guided back into the accommodating space (14).

14. The gearing (10) according to any one of the preceding four claims, **characterised in that** the conveying surface (12a) is formed by a planetary carrier (24, 34) of the at least one planetary stage (20, 30, 40) or by the second housing (12), in particular by an end-facing surface.

15. The gearing (10) according to any one of the preceding five claims, **characterised in that** on the part on which the conveying surface (12a) is formed, one or more delivery cells (12b) are formed on the outer circumferential side of the conveying surface (12a) which are open towards the conveying surface (12a) and embodied to be filled while they pass through the lubricant and to discharge lubricant towards the wiper (16) or conveying surface (12a).

## Revendications

1. Engrenage (10), en particulier pour un treuil ou un treuil à câble (1),
dans lequel l'engrenage (10) comprend :
a) un premier boîtier (11) et un arbre d'entrée (13) qui peut tourner autour d'un axe de rotation (D) par rapport au premier boîtier (11),
b) un second boîtier (12) qui est monté sur le premier boîtier (11) et peut tourner autour de l'axe de rotation (D) par rapport au premier boîtier (11), et
c) au moins un étage planétaire (20, 30, 40) qui relie l'arbre d'entrée (13) au second boîtier (12) de manière cinématique de telle sorte qu'une rotation de l'arbre d'entrée (13) entraîne une rotation autour de l'axe de rotation (D) du second boîtier (12) par rapport au premier boîtier (11), dans lequel le premier boîtier (11) et le second boîtier (12) encadrent un espace de réception (14) dans lequel un lubrifiant liquide et l'au moins un étage planétaire (20, 30, 40) sont disposés,
**caractérisé en ce que**
d) le niveau de liquide maximal (Smax) et le niveau de liquide minimal (Smin) pour le lubrifiant liquide sont fixés de telle sorte que l'au moins un étage planétaire (20, 30, 40) est plongé au moins partiellement en dessous de la surface de liquide du lubrifiant lorsque celui-ci se trouve entre le niveau de liquide maximal (Smax) et niveau de liquide minimal (Smin),
et **en ce que** l'engrenage (10) comprend en outre :
e) un boîtier de fixation (101) fixe par rapport au premier boîtier (11), qui est conçu pour y fixer un moteur d'entraînement pour l'engrenage (10), et qui encadre un pré-espace (17) ouvert vers le moteur d'entraînement, dans lequel l'arbre d'entrée (13) est relié à un premier élément de liaison (53a) d'une liaison arbre-moyeu (53) de manière fixe en rotation autour de l'axe de rotation (D), dans lequel l'arbre d'entraînement du moteur d'entraînement peut être relié au premier élément de liaison (53a) de manière fixe en rotation autour de l'axe de rotation (D),
f) un canal de liquide (107), par le biais duquel le pré-espace (17) est relié à l'espace de réception (14) de manière communicante en liquide et qui présente une ouverture de sortie (107a) avec laquelle le canal de liquide (107) conduit à l'extérieur du pré-espace (17), dans lequel l'ouverture de sortie (107a) est disposée au-dessus du niveau de liquide maximal (Smax) et au-dessus du point le plus bas du premier élément de liaison (53a),
g) un dispositif de transport (12a, 12b, 16), qui transporte le lubrifiant depuis l'espace de réception (14) dans le pré-espace (17) par le biais d'au moins un canal d'alimentation en liquide (15), dans lequel une surface de liquide, qui est située au-dessus du niveau de liquide maximal (Smax), s'établit dans le pré-espace (17) par la position de l'ouverture de sortie (17a), le premier élément de liaison (53a) se trouvant dans le pré-espace (17) au moins partiellement en-dessous de la surface de liquide.

2. Engrenage (10) selon la revendication précédente, **caractérisé en ce que** le boîtier de fixation (101) comprend une bride sur laquelle le moteur d'entraînement peut être bridé.

3. Engrenage (10) selon une des revendications précédentes, **caractérisé en ce que** le boîtier de fixation (101) présente une paroi circonférentielle, qui s'étend autour de l'axe de rotation (D) de l'arbre d'entrée (13) et qui encadre ou délimite le pré-espace (17) avec sa paroi intérieure, et une paroi frontale délimitant axialement le pré-espace (17), dans lequel le premier élément de liaison (53a) est disposé dans le pré-espace (17) ou est relié au pré-espace (17) de manière communicante en liquide par le biais d'une ouverture dans la paroi frontale dirigée vers le côté ouvert du pré-espace (17).

4. Engrenage (10) selon une des revendications précédentes, **caractérisé en ce que** le niveau de liquide maximal (Smax) est disposé en-dessous de l'axe de rotation (D) de l'arbre d'entrée (13) et **en ce que** l'ouverture de sortie (107a), avec laquelle le canal de liquide (107) conduit à l'extérieur du pré-espace (17), est disposée au moins au-dessus du niveau de liquide maximal (Smax), de préférence à hauteur de l'axe de rotation (D) de l'arbre d'entrée (13) ou au-dessus de celui-ci, et/ou en-dessous du point le plus haut du premier élément de liaison (53a).

5. Engrenage (10) selon une des revendications précédentes, **caractérisé en ce que** la fente formée entre le corps formant le premier élément de liaison (53a) et le boîtier de fixation (101) est rendue étanche au moyen d'un joint d'étanchéité annulaire (112), dans lequel l'ouverture de sortie (107a) est disposée au-dessus du point le plus bas et/ou en-dessous du point le plus haut du joint d'étanchéité (112), dans lequel le joint d'étanchéité (12) est par exemple un joint d'arbre, ou un joint d'arbre radial, fixé au boîtier de liaison (101) de manière fixe en rotation autour de l'axe de rotation (D).

6. Engrenage (10) selon une des revendications précédentes, **caractérisé en ce que**, entre le premier boîtier (11) et le boîtier de fixation (101), est disposé un frein (50) qui présente un boîtier de frein (51) fixe par rapport au premier boîtier (11) et au boîtier de fixation (101) et un rotor (52) qui peut tourner par rapport au boîtier de frein (51), dans lequel le rotor (52) est relié à l'arbre d'entrée (13) et au premier élément de liaison (53a) de manière fixe en rotation autour de l'axe de rotation (D), dans lequel le frein (50) présente au moins un premier corps de frein (58a) relié au boîtier de frein (51) de manière fixe en rotation autour de l'axe de rotation (D), au moins un second corps de frein (58b) relié au rotor (51) de manière fixe en rotation autour de l'axe de rotation (D) et une pièce de pression (55) qui peut presser l'au moins un premier corps de frein (58a) et l'au moins un second corps de frein (58b) l'un contre l'autre en direction de l'axe de rotation (D), dans lequel l'engrenage (10) présente en particulier une chambre de pression (57), dans lequel une paroi de la pièce de pression (55) dirigée en direction de l'axe de rotation (D) forme une limite axiale de la chambre de pression (57), dans lequel le frein (50) comprend en outre au moins un ressort (56), qui est précontraint de telle sorte que la pièce de pression (55) presse l'au moins un premier corps de frein (58a) et l'au moins un second corps de frein (58b) l'un contre l'autre lorsque la chambre de pression (57) est purgée, dans lequel le ressort (56) est tendu et la force exercée par la pièce de pression (55) sur les premier et second corps de frein (58a, 58b) est diminuée lorsque la chambre de pression (57) est mise sous pression.

7. Engrenage (10) selon la revendication précédente, **caractérisé en ce que** le boîtier de frein (51) présente une section de l'au moins un canal d'alimentation en liquide (15) disposé entre le dispositif de transport (12a, 12b, 16) et le pré-espace (17) et/ou une section de l'au moins un canal de liquide (107, 106, 104) disposé entre le pré-espace (17) et l'espace de réception (14).

8. Engrenage (10) selon une des deux revendications précédentes, **caractérisé en ce que** la fente formée entre le premier boîtier (11) et l'arbre d'entrée (13) est rendue étanche de l'espace de réception (14) jusqu'au frein (50) au moyen d'un joint d'étanchéité annulaire (11a).

9. Engrenage (10) selon une des trois revendications précédentes, **caractérisé en ce que** le rotor (52) et l'arbre d'entrée (13) sont reliés au moyen d'une liaison arbre-moyeu (54) par complémentarité de forme qui est en liaison avec le pré-espace (17) de manière communicante en liquide, dans lequel une fente formée entre le rotor (52) et l'arbre d'entrée (13) est rendue étanche au moyen d'un joint d'étanchéité annulaire (59) et la liaison arbre-moyeu (54) est disposée entre la fente et le pré-espace (17) ou le joint d'étanchéité (59) et le pré-espace (17).

10. Engrenage (10) selon une des trois revendications précédentes, **caractérisé en ce que** le second boîtier (12) entoure une partie du premier boîtier (11), et
l'au moins un étage planétaire (20, 30, 40) relie l'arbre d'entrée (13) de manière cinématique à une surface de transport (12a) tournant de manière annulaire autour de l'axe de rotation de telle sorte qu'une rotation (D) de l'arbre d'entrée (13) entraîne une rotation de la surface de transport (12a) autour de l'axe de rotation (D) par rapport au premier boîtier (11), dans lequel
la surface de transport (12a) est disposée dans l'espace de réception (14), dans lequel le niveau de liquide maximal (Smax) et le niveau de liquide minimal (Smin) pour le lubrifiant liquide sont fixés de telle sorte que la surface de transport (12a) est plongée au moins partiellement en dessous de la surface de liquide du lubrifiant lorsque celui-ci se trouve entre le niveau de liquide maximal (Smax) et niveau de liquide minimal (Smin), et
dans lequel un racleur (16) est disposé sur le premier boîtier (11) et est situé au niveau de la surface de transport (12a) ou est éloignée de la surface de transport (12a) par une fente, ce qui permet de racler sur la surface de transport (12a) au moyen du racleur (16) un film de lubrifiant à la surface de transport (12a) qui se forme lors de la traversée de la surface de transport (12a) par le lubrifiant, dans lequel l'au moins un canal d'alimentation en liquide (15), formé en particulier par le premier boîtier (11), est disposé par rapport au racleur (16) de telle sorte que le lubrifiant parvient depuis le racleur (16) dans l'au moins un canal d'alimentation en liquide (15).

11. Engrenage (10) selon la revendication précédente, **caractérisé en ce que** le racleur (16) présente une section montée à ressort qui est pressée par la force du ressort contre la surface de transport (12a), ou **en ce que**, entre le racleur (16) et le premier boîtier (11), est disposé un ressort qui presse le racleur (16) contre la surface de transport (12a), ou **en ce que** la largeur de la fente est inférieure ou égale à 4 mm, de préférence est inférieure ou égale à 3 mm.

12. Engrenage (10) selon une des deux revendications précédentes, **caractérisé en ce que** le racleur (16) présente une paroi (16a) qui est située sur la surface de transport (12a) ou est formée entre la surface de transport (12a) et la fente, et au moins sur un côté et en-dessous de la paroi (16a) un conduit (16b) qui conduit jusqu'au canal d'alimentation en liquide (15).

13. Engrenage (10) selon une des trois revendications précédentes, **caractérisé en ce que** l'au moins un canal d'alimentation en liquide (15) fait partie d'une lubrification en circulation (15, 17, 107, 106, 14), qui permet de conduire de nouveau dans l'espace de réception (14) le lubrifiant arrivant dans le canal d'alimentation en liquide (15) depuis le racleur (16), en particulier le lubrifiant raclé de la surface de transport (12a).

14. Engrenage (10) selon une des quatre revendications précédentes, **caractérisé en ce que** la surface de transport (12) est formée par un porte-satellites (24, 34) de l'au moins un étage planétaire (20, 30, 40) ou par le second boîtier (12), en particulier par une surface frontale.

15. Engrenage (10) selon une des cinq revendications précédentes, **caractérisé en ce que** sur la partie où la surface de transport (12a) est formée, sur le côté circonférentiel extérieur de la surface de transport (12a), une ou plusieurs cellules de transport (12b) ouvertes vers la surface de transport (12a) sont formées et sont conçues pour qu'elles se remplissent pendant la traversée par le lubrifiant et dégagent le lubrifiant vers le racleur (16) ou la surface de transport (12a).
